(19) Europäisches Patentamt

European Patent Office

Office européen des brevets

(11) **EP 4 099 118 B1**

(12) **EUROPEAN PATENT SPECIFICATION**

(45) Date of publication and mention
of the grant of the patent:
**21.05.2025 Bulletin 2025/21**

(21) Application number: **20921027.7**

(22) Date of filing: **25.02.2020**

(51) International Patent Classification (IPC):
*G05D 1/00* (2024.01)    *B60W 50/06* (2006.01)
*B60W 30/02* (2012.01)    *B60W 30/10* (2006.01)

(52) Cooperative Patent Classification (CPC):
**B60W 50/0098; B60W 30/02; B60W 50/06;**
B60W 2050/0013; B60W 2050/0031;
B60W 2050/0033; B60W 2552/30; B60W 2552/53;
B60W 2554/802; B60W 2710/20; B60W 2710/205;
B60W 2720/30

(86) International application number:
**PCT/CN2020/076678**

(87) International publication number:
**WO 2021/168669 (02.09.2021 Gazette 2021/35)**

(54) **VEHICLE CONTROL METHOD AND APPARATUS**

VERFAHREN UND VORRICHTUNG ZUR FAHRZEUGSTEUERUNG

PROCÉDÉ ET APPAREIL DE COMMANDE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.12.2022 Bulletin 2022/49**

(73) Proprietor: **Shenzhen Yinwang Intelligent
Technologies Co., Ltd.
Shenzhen, Guangdong 518129 (CN)**

(72) Inventors:
 • **LIU, Yalin
   Shenzhen, Guangdong 518129 (CN)**
 • **SONG, Xiaolin
   Changsha, Hunan 410082 (CN)**
 • **CAO, Haotian
   Changsha, Hunan 410082 (CN)**
 • **CHEN, Xiaohua
   Shenzhen, Guangdong 518129 (CN)**
 • **CHEN, Qi
   Shenzhen, Guangdong 518129 (CN)**
 • **TAO, Yongxiang
   Shenzhen, Guangdong 518129 (CN)**

(74) Representative: **Maiwald GmbH
Elisenhof
Elisenstraße 3
80335 München (DE)**

(56) References cited:
  CN-A- 107 521 496    CN-A- 107 797 534
  CN-A- 108 427 417    CN-A- 108 454 623
  CN-A- 110 271 608    US-A1- 2019 391 580
  US-B1- 10 407 035

 • QUIRYNEN RIEN ET AL: "Embedded
   Optimization Algorithms for Steering in
   Autonomous Vehicles based on Nonlinear Model
   Predictive Control", 2018 ANNUAL AMERICAN
   CONTROL CONFERENCE (ACC), AACC, 27 June
   2018 (2018-06-27), pages 3251 - 3256,
   XP033387467, DOI: 10.23919/ACC.2018.8431260

**(Cont. next page)**

• **BERNTORP KARL ET AL: "Models and methodology for optimal trajectory generation in safety-critical road?vehicle manoeuvres", VEHICLE SYSTEM DYNAMICS: INTERNATIONAL JOURNAL OF VEHICLE MECHANICS AND MOBILITY, vol. 52, no. 10, 3 October 2014 (2014-10-03), GB, pages 1304 - 1332, XP055801946, ISSN: 0042-3114, Retrieved from the Internet <URL:https://www.tandfonline.com/doi/pdf/10.1080/00423114.2014.939094?needAccess=true> DOI: 10.1080/00423114.2014.939094**

• **BERNTORP KARL ET AL: "Models and methodology for optimal trajectory generation in safety-critical road?vehicle manoeuvres", VEHICLE SYSTEM DYNAMICS: INTERNATIONAL JOURNAL OF VEHICLE MECHANICS AND MOBILITY,**

## Description

### TECHNICAL FIELD

This invention relates to the field of autonomous driving technologies, and in particular, to a vehicle control method and apparatus.

### BACKGROUND

An autonomous vehicle is also referred to as an unmanned vehicle, and is an intelligent vehicle that implements unmanned driving by using a computer system. The autonomous vehicle relies on collaboration of artificial intelligence, visual computing, radar, a monitoring apparatus, and a global positioning system to enable a computer to automatically and safely operate a motor vehicle without any active operation from a human being. Because road conditions are complex, when traveling on a road, the autonomous vehicle needs to avoid a non-fixed obstacle such as a vehicle or a pedestrian, and further needs to avoid a fixed obstacle such as a static pedestrian. To ensure safety of the autonomous vehicle, a traveling path of the vehicle is usually planned in a path planning manner in the conventional technology, so that the vehicle travels away from the obstacles. Path planning means searching for a collision-free path from an initial state to a target state in an environment with obstacles according to a specific evaluation standard.

In the conventional technology, there are mainly two path planning methods. One method is a path planning method based on an artificial potential field method. A vehicle motion in an ambient environment is abstracted as a motion in a gravitational field. An obstacle and a road boundary are repulsive fields, a target point is a gravitational field, and a planned path is generated according to a gradient descent direction obtained by superimposing the repulsive fields and the gravitational field. Then, the vehicle adjusts a wheel steering angle and the like in a traveling process of the vehicle based on the planned path, a kinematic model of the vehicle, and a current status of the vehicle, so that the vehicle travels according to the planned path. The other method is a path planning method based on a rapidly random-exploring tree (rapidly random-exploring tree, RRT). Random sampling points in space are explored, and a planned path between a start point and a target point is determined based on whether the random sampling points and a connection line between the random sampling points collide with an obstacle area. Then, the vehicle controls a wheel steering angle and the like in a traveling process of the vehicle based on a "preview-follower" driver model, so that the vehicle travels according to the planned path.

However, in the foregoing two path planning methods, a planned path may be inappropriate. For example, a front wheel steering angle that is determined according to the planned path in a traveling process of the vehicle is excessively large, and this violates a motion rule of the vehicle. Consequently, the vehicle cannot travel based on the front wheel steering angle. Alternatively, a front wheel steering angle change rate is unstable, and consequently, a traveling track of the vehicle is tortuous.

QUIRYNEN RIEN ET AL: "Embedded Optimization Algorithms for Steering in Autonomous Vehicles based on Nonlinear Model Predictive Control", 2018 ANNUAL AMERICAN CONTROL CONFERENCE (ACC), AACC, 27 June 2018 (2018-06-27), pages 3251 -3256, describes a nonlinear model predictive control (NMPC) that deals with the nonlinear vehicle dynamics as well as the system limitations and geometric constraints given a desired trajectory that can be provided by a supervisory algorithm for path planning.

Berntorp Karl ET AL: "Models and methodology for optimal trajectory generation in safety-critical road–vehicle manoeuvres", Vehicle System Dynamics: international journal of vehicle mechanics and mobility, vol. 52, no. 10, 3 October 2014 (2014-10-03), pages 1304-1332, relates to control solutions for vehicle maneuvers.

### SUMMARY

This invention provides a vehicle control method and apparatus, to determine a value range of control information of a vehicle based on a vehicle dynamic model, a road kinematic model, a tire friction and slip rate model, and status information of the vehicle, so as to obtain a value of a front wheel steering angle change rate of the vehicle and a value of a wheel torque of the vehicle that comply with a dynamic rule, and resolve a problem that a planned path is inappropriate.

To achieve the foregoing objective, this invention uses the following technical solutions.

According to a first aspect, embodiments of this invention provide a vehicle control method. The method is used in the field of autonomous driving technologies and includes: determining a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle, where the dynamic model of the vehicle represents a change rule of a motion status of the vehicle, the kinematic model of the road on which the vehicle is located represents a change rule of a location of the vehicle relative to a road edge of the road on which the vehicle is located, and the tire friction model of the vehicle represents a change rule of a tire friction force of the vehicle; then determining a value of the front wheel steering angle change rate of the vehicle based on the value range of the front wheel steering angle change rate of the vehicle and a lateral motion target function of the vehicle, where the lateral motion target function of the vehicle is a function about the front wheel steering angle change rate of the vehicle, and the lateral motion target function represents a deviation between a lateral motion of the vehicle and an ideal lateral motion; determining a value of the wheel torque of the vehicle based on the value range of the wheel torque of the vehicle and a longitudinal motion target function of the vehicle, where the longitudinal motion target function of the vehicle is a function about the wheel torque of the vehicle, and the longitudinal motion target function of the vehicle represents a deviation between a longitudinal motion of the vehicle and an ideal longitudinal motion; and finally controlling a motion of the vehicle based on the value of the front wheel steering angle change rate of the vehicle and the value of the wheel torque of the vehicle.

In the vehicle control method described in embodiments of this invention, in the foregoing process, the value range of the front wheel steering angle change rate of the vehicle and the value range of the wheel torque of the vehicle are determined based on the dynamic model of the vehicle, the kinematic model of the road on which the vehicle is located, the tire friction model of the vehicle, and the status information of the vehicle. Therefore, the value of the front wheel steering angle change rate of the vehicle and the value of the wheel torque of the vehicle that are determined based on the value ranges comply with kinematic and dynamic rules of the vehicle, and the motion of the vehicle can be controlled within a traveling capability range of the vehicle. This well resolves a problem that a planned path is inappropriate in the conventional technology.

In a possible implementation, if the status information of the vehicle includes status information of the vehicle at a start point and status information of the vehicle at an end point, where the start point is a location of the vehicle at an initial moment, and the end point is a location of the vehicle after the motion ends, the determining a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle includes: establishing a vehicle-road dynamic model based on the tire friction model of the vehicle, the dynamic model of the vehicle, and the kinematic model of the road on which the vehicle is located, where the vehicle-road dynamic model represents an association relationship between the dynamic model of the vehicle and the kinematic model of the road on which the vehicle is located; then determining a first value range of the front wheel steering angle change rate of the vehicle and a second value range of the wheel torque of the vehicle based on the status information of the vehicle at the start point, the status information of the vehicle at the end point, and the vehicle-road dynamic model; and finally determining the first value range as the value range of the front wheel steering angle change rate, and determining the second value range as the value range of the wheel torque of the vehicle.

In the vehicle control method described in embodiments of this invention, in the foregoing process, the first value range of the front wheel steering angle change rate and the second value range of the wheel torque are determined based on the dynamic model of the vehicle, the kinematic model of the road on which the vehicle is located, the tire friction model, and the status information of the vehicle at the start point and the end point. Therefore, a value of the front wheel steering angle change rate of the vehicle and a value of the wheel torque of the vehicle that are determined based on the first value range and the second value range comply with kinematic and dynamic rules of the vehicle, and the motion of the vehicle can be controlled within a traveling capability range of the vehicle. This better resolves a problem that a planned path is inappropriate in the conventional technology.

In a possible implementation, if the status information of the vehicle includes a distance between the vehicle and an obstacle, a preset safe distance (that is, a preset distance between the vehicle and the obstacle), a distance between the obstacle and the road edge, a width of the vehicle, and a width of the road on which the vehicle is located, the determining a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle includes: first establishing a vehicle-road dynamic model based on the tire friction model of the vehicle, the dynamic model of the vehicle, and the kinematic model of the road on which the vehicle is located, where the vehicle-road dynamic model represents an association relationship between the dynamic model of the vehicle and the kinematic model of the road on which the vehicle is located; then determining a third value range of the front wheel steering angle change rate of the vehicle and a fourth value range of the wheel torque of the vehicle based on a first constraint condition and the vehicle-road dynamic model, where the first constraint condition is a value range of a distance between the road edge and the vehicle, and the first constraint condition is obtained based on the status information of the vehicle; and finally determining the third value range as the value range of the front wheel steering angle change rate of the vehicle, and determining the fourth value range as the value range of the wheel torque of the vehicle.

In the vehicle control method described in embodiments of this invention, in the foregoing process, the third value range of the front wheel steering angle change rate of the vehicle and the fourth value range of the wheel torque of the vehicle are determined based on the dynamic model of the vehicle, the kinematic model of the road on which the vehicle is located, the tire friction model, and the first constraint condition. The first constraint condition is the value range of the distance between the road edge and the vehicle. Therefore, the front wheel steering angle change rate of the vehicle and the wheel torque of the vehicle that are determined based on the third value range and the fourth value range comply with kinematic and dynamic rules of the vehicle, so that the motion of the vehicle can be controlled within a traveling capability range of the vehicle, and a collision between the vehicle and the road edge can be avoided. This better resolves a problem that a planned path is inappropriate in the conventional technology.

In a possible implementation, if the status information of the vehicle includes a maximum longitudinal speed of the vehicle, a maximum front wheel steering angle of the vehicle, a maximum front wheel steering angle change rate, a maximum yaw angle of the vehicle, and a maximum yaw angular acceleration of the vehicle, the determining a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle includes: first establishing a vehicle-road dynamic model based on the tire friction model of the vehicle, the dynamic model of the vehicle, and the kinematic model of the road on which the vehicle is located, where the vehicle-road dynamic model represents an association relationship between the dynamic model of the vehicle and the kinematic model of the road on which the vehicle is located; then determining a fifth value range of the front wheel steering angle change rate of the vehicle and a sixth value range of the wheel torque of the vehicle based on a second constraint condition and the vehicle-road dynamic model, where the second constraint condition includes the maximum longitudinal speed of the vehicle, the maximum front wheel steering angle of the vehicle, and the maximum front wheel steering angle change rate of the vehicle, and the second constraint condition is obtained based on the status information of the vehicle; and finally determining the fifth value range as the value range of the front wheel steering angle change rate of the vehicle, and determining the sixth value range as the value range of the wheel torque of the vehicle.

In the vehicle control method described in embodiments of this invention, in the foregoing process, the fifth value range of the front wheel steering angle change rate and the sixth value range of the wheel torque are determined based on the dynamic model of the vehicle, the kinematic model of the road on which the vehicle is located, the tire friction model of the vehicle, and the second constraint condition. The second constraint condition is the maximum longitudinal speed of the vehicle, the maximum front wheel steering angle of the vehicle, and the maximum front wheel steering angle change rate of the vehicle. Therefore, the front wheel steering angle change rate of the vehicle and the wheel torque of the vehicle that are determined based on the fifth value range and the sixth value range comply with kinematic and dynamic rules of the vehicle, and the motion of the vehicle can be controlled within a traveling capability range of the vehicle. This better resolves a problem that a planned path is inappropriate in the conventional technology. This can further ensure that the vehicle is stable in a motion process, and improve safety and comfort of autonomous driving of the vehicle.

In a possible implementation, the second constraint condition further includes the maximum yaw angle of the vehicle and/or the maximum yaw angular acceleration of the vehicle.

It should be noted that, in the foregoing process, when the second constraint condition includes more parameters, a value range of vehicle control information (including the front wheel steering angle change rate of the vehicle and the wheel torque of the vehicle) determined based on the second constraint condition better complies with a motion rule of the vehicle, can better resolve a problem that a planned path is inappropriate, and ensure a higher stability of the vehicle in the motion process, that is, higher safety and comfort of autonomous driving of the vehicle.

In a possible implementation, the determining a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle includes: obtaining an intersection set of at least two of the first value range, the third value range, and the fifth value range, to obtain the value range of the front wheel steering angle change rate of the vehicle; and obtaining an intersection set of at least two of the second value range, the fourth value range, and the sixth value range, to obtain the value range of the wheel torque of the vehicle.

It should be noted that, in comparison with determining the value range of the front wheel steering angle change rate of the vehicle and the wheel torque of the vehicle based on the status information at the start point and the status information at the end point, the first constraint condition, or the second constraint condition, determining the value range of the vehicle control information based on at least two of the status information (including the status information of the vehicle at the start point and the status information of the vehicle at the end point) of the vehicle, the first constraint condition, and the second constraint condition can ensure that a value range of a vehicle control value can better comply with a motion rule of the vehicle, that is, within a traveling capability range of the vehicle, to better resolve a problem that a planned path is inappropriate.

In a possible implementation, if the distance between the vehicle and the obstacle is less than or equal to the preset safe distance, the first constraint condition is determined based on the distance between the obstacle and the road edge, the width of the vehicle, and the width of the road on which the vehicle is located. If the distance between the vehicle and the obstacle is greater than the preset safe distance, the first constraint condition is determined based on the width of the vehicle and the width of the road on which the vehicle is located.

In the foregoing process, the value range of the vehicle control information is determined based on a value range of the distance between the vehicle and the obstacle. This ensures a specific distance between the vehicle and the obstacle while the vehicle control information complies with a motion rule of the vehicle, to avoid a collision and resolve a problem that a planned path is inappropriate in the conventional technology.

In a possible implementation, the determining a value of the front wheel steering angle change rate of the vehicle based on the value range of the front wheel steering angle change rate of the vehicle and a lateral motion target function of the vehicle includes: determining a minimum value of the lateral motion target function of the vehicle based on the value range of the front wheel steering angle change rate of the vehicle; and then determining a value that is of the front wheel steering angle change rate of the vehicle and that corresponds to the minimum value of the lateral motion target function of the vehicle as the front wheel steering angle change rate.

In a possible implementation, the determining a value of the wheel torque of the vehicle based on the value range of the wheel torque of the vehicle and a longitudinal motion target function of the vehicle includes: determining a minimum value of the longitudinal motion target function of the vehicle based on the value range of the wheel torque of the vehicle; and then determining a value that is of the wheel torque of the vehicle and that corresponds to the minimum value of the longitudinal motion target function of the vehicle as the wheel torque of the vehicle.

In a possible implementation, the determining a minimum value of the lateral motion target function of the vehicle based on the value range of the front wheel steering angle change rate of the vehicle includes: first determining, for each value of the front wheel steering angle change rate of the vehicle within the value range of the front wheel steering angle change rate of the vehicle, a longitudinal speed of the vehicle, a heading angle of the vehicle, a heading angle of the road edge, a curvature of a vehicle track, a curvature of the road edge, and a distance between the vehicle and an obstacle that correspond to a value of the front wheel steering angle change rate of the vehicle; then determining, based on a difference between the heading angle of the vehicle and the heading angle of the road edge, a difference between the curvature of the vehicle track and the curvature of the road edge, the value of the front wheel steering angle change rate of the vehicle, and a difference between an obstacle impact radius and the distance between the vehicle and the obstacle, a value that is of the lateral motion target function of the vehicle and that corresponds to each value of the front wheel steering angle change rate of the vehicle; and finally determining the minimum value of the lateral motion target function of the vehicle.

In the foregoing process, the minimum value of the lateral target function of the vehicle is used to determine the value of the front wheel steering angle change rate of the vehicle, so that a motion track of the vehicle can be parallel to the road edge as much as possible while the vehicle can avoid the obstacle during a lateral motion. In addition, when all other conditions of the vehicle motion are met, a smaller value of the front wheel steering angle change rate of the vehicle indicates a more stable motion status of the vehicle, that is, higher comfort and safety in a motion process of the vehicle.

In a possible implementation, the determining a minimum value of the longitudinal motion target function of the vehicle based on the value range of the wheel torque of the vehicle includes: determining, for each value of the wheel torque of the vehicle within the value range of the wheel torque of the vehicle, a longitudinal speed that is of the vehicle and that corresponds to a value of the wheel torque of the vehicle and a target longitudinal speed; determining, based on the value of the wheel torque of the vehicle and a difference between the longitudinal speed of the vehicle and the target longitudinal speed, a value that is of the longitudinal target function of the vehicle and that corresponds to each value of the wheel torque of the vehicle; and finally determining the minimum value of the longitudinal target function of the vehicle.

According to the foregoing process, when all other conditions of the vehicle motion are met, a smaller value of the wheel torque of the vehicle indicates a more stable motion status of the vehicle, that is, higher comfort and safety in a motion process of the vehicle.

According to a second aspect, embodiments of this invention provide a vehicle control apparatus, used in the field of autonomous driving technologies. The apparatus includes a determining unit and a control unit.

In a possible implementation, the determining unit is configured to determine a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle. The dynamic model of the vehicle represents a change rule of a motion status of the vehicle, the kinematic model of the road on which the vehicle is located represents a change rule of a location of the vehicle relative to a road edge of the road on which the vehicle is located, and the tire friction model of the vehicle represents a change rule of a tire friction force of the vehicle. The determining unit is further configured to determine a value of the front wheel steering angle change rate of the vehicle based on the value range of the front wheel steering angle change rate of the vehicle and a lateral motion target function of the vehicle. The lateral motion target function of the vehicle is a function about the front wheel steering angle change rate of the vehicle, and the lateral motion target function of the vehicle represents a deviation between a lateral motion of the vehicle and an ideal lateral motion. The determining unit is further configured to determine a value of the wheel torque of the vehicle based on the value range of the wheel torque of the vehicle and a longitudinal motion target function of the vehicle. The longitudinal motion target function of the vehicle is a function about the wheel torque of the vehicle, and the longitudinal motion target function of the vehicle represents a deviation between a longitudinal motion of the vehicle and an ideal longitudinal motion. The control unit is configured to control a motion of the vehicle based on the value of the front wheel steering angle change rate of the vehicle and the value of the wheel torque of the vehicle.

In a possible implementation, if the status information of the vehicle includes status information of the vehicle at a start point and status information of the vehicle at an end point, where the start point is a location of the vehicle at an initial moment, and the end point is a location of the vehicle after the motion ends, that the determining unit is configured to determine a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle includes: establishing a vehicle-road dynamic model based on the tire friction model of the vehicle, the dynamic model of the vehicle, and the kinematic model of the road on which the vehicle is located, where the vehicle-road dynamic model represents an association relationship between the dynamic model of the vehicle and the kinematic model of the road; then determining a first value range of the front wheel steering angle change rate of the vehicle and a second value range of the wheel torque of the vehicle based on the status information of the vehicle at the start point, the status information of the vehicle at the end point, and the vehicle-road dynamic model; and finally determining the first value range as the value range of the front wheel steering angle change rate of the vehicle, and determining the second value range as the value range of the wheel torque of the vehicle.

In a possible implementation, if the status information of the vehicle includes a distance between the vehicle and an obstacle, a preset safe distance, a distance between the obstacle and the road edge, a width of the vehicle, and a width of the road on which the vehicle is located, where the preset safe distance is a preset distance between the vehicle and the obstacle, that the determining unit is configured to determine a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle includes: first establishing a vehicle-road dynamic model based on the tire friction model of the vehicle, the dynamic model of the vehicle, and the kinematic model of the road on which the vehicle is located, where the vehicle-road dynamic model represents an association relationship between the dynamic model of the vehicle and the kinematic model of the road; then determining a third value range of the front wheel steering angle change rate of the vehicle and a fourth value range of the wheel torque of the vehicle based on a first constraint condition and the vehicle-road dynamic model, where the first constraint condition is a value range of a distance between the road edge and the vehicle, and the first constraint condition is obtained based on the status information of the vehicle; and finally determining the third value range as the value range of the front wheel steering angle change rate of the vehicle, and determining the fourth value range as the value range of the wheel torque of the vehicle.

In a possible implementation, if the status information of the vehicle includes a maximum longitudinal speed of the vehicle, a maximum front wheel steering angle of the vehicle, a maximum front wheel steering angle change rate of the vehicle, a maximum yaw angle of the vehicle, and a maximum yaw angular acceleration of the vehicle, that the determining unit is configured to determine a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle includes: first establishing a vehicle-road dynamic model based on the tire friction model of the vehicle, the dynamic model of the vehicle, and the kinematic model of the road on which the vehicle is located, where the vehicle-road dynamic model represents an association relationship between the dynamic model of the vehicle and the kinematic model of the road; then determining a fifth value range of the front wheel steering angle change rate of the vehicle and a sixth value range of the wheel torque of the vehicle based on a second constraint condition and the vehicle-road dynamic model, where the second constraint condition includes the maximum longitudinal speed of the vehicle, the maximum front wheel steering angle of the vehicle, and the maximum front wheel steering angle change rate of the vehicle, and the second constraint condition is obtained based on the status information of the vehicle; and finally determining the fifth value range as the value range of the front wheel steering angle change rate of the vehicle, and determining the sixth value range as the value range of the wheel torque of the vehicle.

In a possible implementation, the second constraint condition further includes the maximum yaw angle of the vehicle and/or the maximum yaw angular acceleration of the vehicle.

In a possible implementation, that the determining unit is configured to determine a value range of a front wheel steering angle change rate and a value range of a wheel torque based on a dynamic model of the vehicle, a kinematic model of a road on which the vehicle is located, a tire friction model of the vehicle, and status information of the vehicle includes: obtaining an intersection set of at least two of the first value range, the third value range, and the fifth value range, to obtain the value range of the front wheel steering angle change rate of the vehicle; and obtaining an intersection set of at least two of the second value range, the fourth value range, and the sixth value range, to obtain the value range of the wheel torque of the vehicle.

In a possible implementation, the determining unit is further configured to: if the distance between the vehicle and the obstacle is less than or equal to the preset safe distance, determine the first constraint condition based on the distance between the obstacle and the road edge, the width of the vehicle, and the width of the road on which the vehicle is located; or if the distance between the vehicle and the obstacle is greater than the preset safe distance, determine the first constraint condition based on the width of the vehicle and the width of the road on which the vehicle is located.

In a possible implementation, that the determining unit is further configured to determine the front wheel steering angle change rate of the vehicle based on the value range of the front wheel steering angle change rate of the vehicle and a lateral motion target function of the vehicle includes: determining a minimum value of the lateral motion target function of the vehicle based on the value range of the front wheel steering angle change rate of the vehicle; and then determining a value that is of the front wheel steering angle change rate and that corresponds to the minimum value of the lateral motion target function of the vehicle as the front wheel steering angle change rate.

In a possible implementation, that the determining unit is further configured to determine a value of the wheel torque of the vehicle based on the value range of the wheel torque of the vehicle and a longitudinal motion target function of the vehicle includes: determining a minimum value of the longitudinal motion target function of the vehicle based on the value range of the wheel torque of the vehicle; and then determining a value that is of the wheel torque and that corresponds to the minimum value of the longitudinal motion target function of the vehicle as the wheel torque of the vehicle.

In a possible implementation, that the determining unit is further configured to determine a minimum value of the lateral motion target function of the vehicle based on the value range of the front wheel steering angle change rate of the vehicle includes: first determining, for each value of the front wheel steering angle change rate of the vehicle within the value range of the front wheel steering angle change rate of the vehicle, a longitudinal speed of the vehicle, a heading angle of the vehicle, a heading angle of the road edge, a curvature of a vehicle track, a curvature of the road edge, and a distance between the vehicle and an obstacle that correspond to a value of the front wheel steering angle change rate of the vehicle; then determining, based on a difference between the heading angle of the vehicle and the heading angle of the road edge, a difference between the curvature of the vehicle track and the curvature of the road edge, the value of the front wheel steering angle change rate, and a difference between an obstacle impact radius and the distance between the vehicle and the obstacle, a value that is of the lateral motion target function of the vehicle and that corresponds to each value of the front wheel steering angle change rate of the vehicle; and finally determining the minimum value of the lateral motion target function of the vehicle.

In a possible implementation, that the determining unit is further configured to determine a minimum value of the longitudinal motion target function of the vehicle based on the value range of the wheel torque of the vehicle includes: determining, for each value of the wheel torque of the vehicle within the value range of the wheel torque of the vehicle, a longitudinal speed that is of the vehicle and that corresponds to each value of the wheel torque of the vehicle and a target longitudinal speed; determining, based on the value of the wheel torque of the vehicle and a difference between the longitudinal speed of the vehicle and the target longitudinal speed, a value that is of the longitudinal target function of the vehicle and that corresponds to each value of the wheel torque of the vehicle; and finally determining the minimum value of the longitudinal target function of the vehicle.

According to a third aspect, this invention provides a vehicle control apparatus, including a processor, a memory, and a communications interface. The communications interface is configured to communicate with another device or a communications network. The memory is configured to store one or more programs. The one or more programs include computer-executable instructions. When the apparatus runs, the processor executes the computer-executable instructions stored in the memory, so that the apparatus performs the vehicle control method according to any one of the first aspect and the optional implementations of the first aspect.

According to a fourth aspect, this invention provides a computer-readable storage medium storing one or more programs. The computer-readable storage medium stores instructions, the one or more programs include the instructions, and when the instructions are executed by a computer, the computer is enabled to perform the vehicle control method according to any one of the first aspect and the optional implementations of the first aspect.

According to a fifth aspect, this invention provides a computer program product including instructions. When the instructions are run on a computer, the computer is enabled to perform the vehicle control method according to any one of the first aspect and the optional implementations of the first aspect.

## BRIEF DESCRIPTION OF DRAWINGS

FIG. 1 is a schematic diagram 1 of a structure of an autonomous vehicle according to an embodiment of this invention;

FIG. 2 is a schematic diagram of a structure of an autonomous vehicle in the conventional technology;

FIG. 3 is a schematic diagram of a path planning method based on an artificial potential field method in the conventional technology;

FIG. 4 is a schematic diagram of a path planning method based on a rapidly random-exploring tree in the conventional technology;

FIG. 5 is a schematic diagram 2 of a structure of an autonomous vehicle according to an embodiment of this invention;

FIG. 6 is a schematic diagram of a structure of a computer system according to an embodiment of this invention;

FIG. 7 is a schematic diagram of a structure of a chip system according to an embodiment of this invention;

FIG. 8 is a schematic application diagram 1 in which an autonomous vehicle is instructed from a cloud side according to an embodiment of this invention;

FIG. 9 is a schematic application diagram 2 in which an autonomous vehicle is instructed from a cloud side according to an embodiment of this invention;

FIG. 10 is a schematic diagram of a structure of a computer program product according to an embodiment of this invention;

FIG. 11 is a schematic flowchart of a vehicle control method according to an embodiment of this application;

FIG. 12 is a schematic diagram 1 of status information of a vehicle according to an embodiment of this invention;

FIG. 13 is a schematic diagram 2 of status information of a vehicle according to an embodiment of this invention;

FIG. 14 is a schematic diagram of a first constraint condition according to an embodiment of this invention;

(a) in FIG. 15 is a schematic diagram 3 of status information of a vehicle according to an embodiment of this invention;

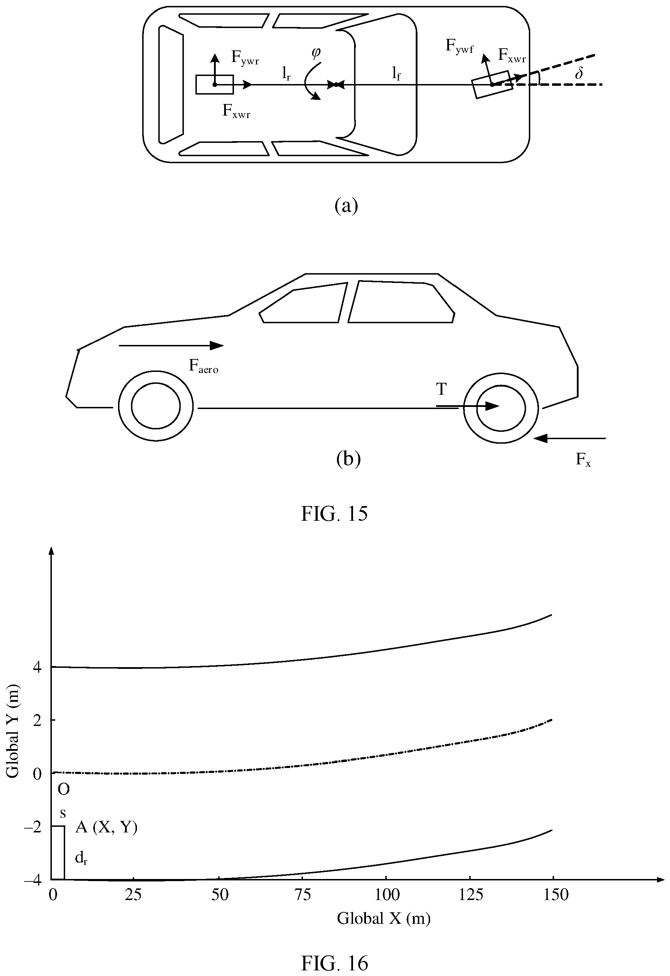

(b) in FIG. 15 is a schematic diagram 4 of status information of a vehicle according to an embodiment of this invention;

FIG. 16 is a schematic diagram of a road coordinate system according to an embodiment of this invention;

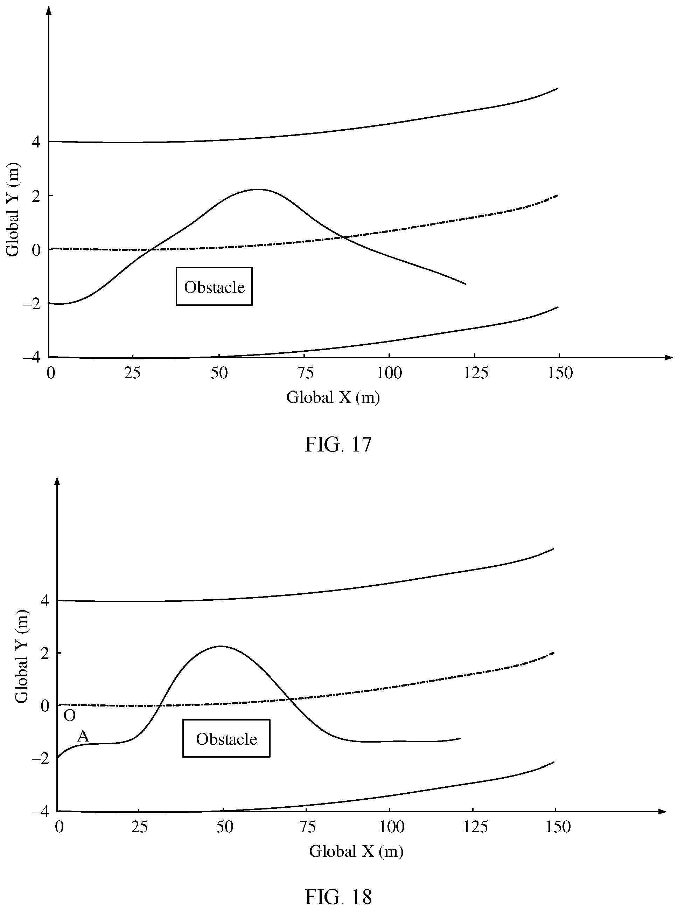

FIG. 17 is a schematic diagram of a vehicle traveling track obtained according to an embodiment of this invention;

FIG. 18 is a schematic diagram 1 of a vehicle traveling track obtained in the conventional technology;

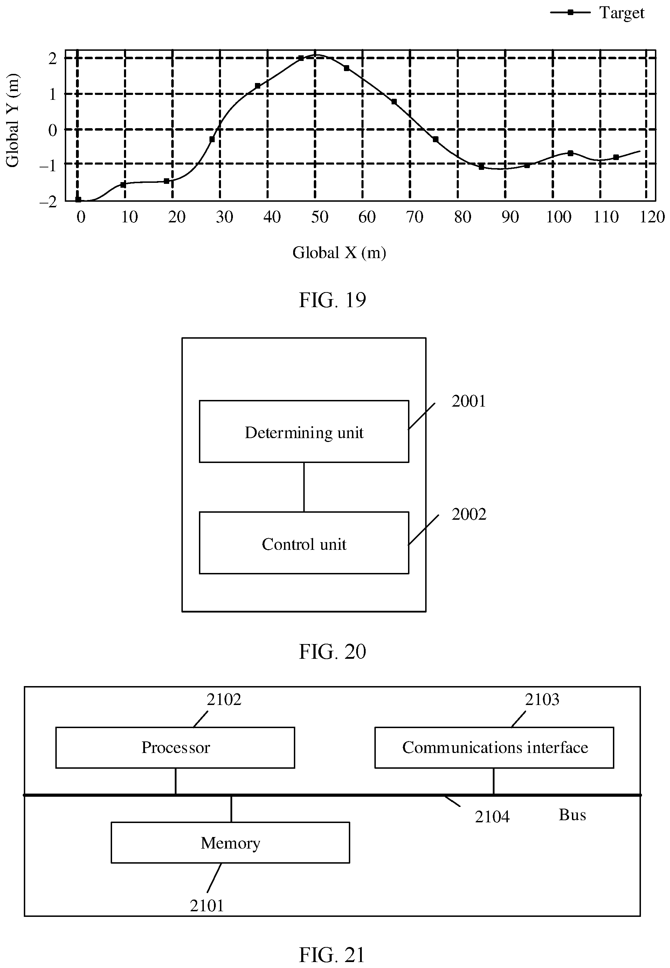

FIG. 19 is a schematic diagram 2 of a vehicle traveling track obtained in the conventional technology;

FIG. 20 is a schematic diagram 1 of a structure of a vehicle control apparatus according to an embodiment of this invention; and

FIG. 21 is a schematic diagram 2 of a structure of a vehicle control apparatus according to an embodiment of this invention.

## DESCRIPTION OF EMBODIMENTS

To resolve the foregoing technical problem in the conventional technology, this invention provides a vehicle control method. The following describes implementations of this invention in detail with reference to the accompanying drawings.

A vehicle control method provided in embodiments of this invention is used in a vehicle having an autonomous driving function, or is used in another device (for example, a cloud server) having an autonomous driving control function. The vehicle may implement, by using components (including hardware and software) included in the vehicle, the vehicle control method provided in embodiments of this invention, to determine a value range of vehicle control information, for example, a value range of a front wheel steering angle change rate of the vehicle and a value range of a wheel torque of the vehicle, based on a dynamic model of the vehicle, a kinematic model of a road on which the vehicle is located, a tire friction model of the vehicle, and status information of the vehicle. Then, a value of the front wheel steering angle change rate of the vehicle is determined based on the value range of the front wheel steering angle change rate of the vehicle and a lateral motion target function of the vehicle, and a value of the wheel torque of the vehicle is determined based on the value range of the wheel torque of the vehicle and a longitudinal motion target function of the vehicle. Finally, a motion of the vehicle is controlled based on the value of the front wheel steering angle change rate of the vehicle and the value of the wheel torque of the vehicle. Alternatively, the another device (for example, a server) is configured to implement the vehicle control method in embodiments of this invention, determine vehicle control information, that is, a front wheel steering angle change rate and a wheel torque, and control a motion of the vehicle based on the vehicle control information. The another device may further send, to the vehicle, the obtained front wheel steering angle change rate and the obtained wheel torque that are used to control the motion of the vehicle. The dynamic model of the vehicle represents a change rule of a motion status of the vehicle, the kinematic model of the road on which the vehicle is located represents a change rule of a location of the vehicle relative to a road edge, and the tire friction model represents a change rule of a tire friction force of the vehicle.

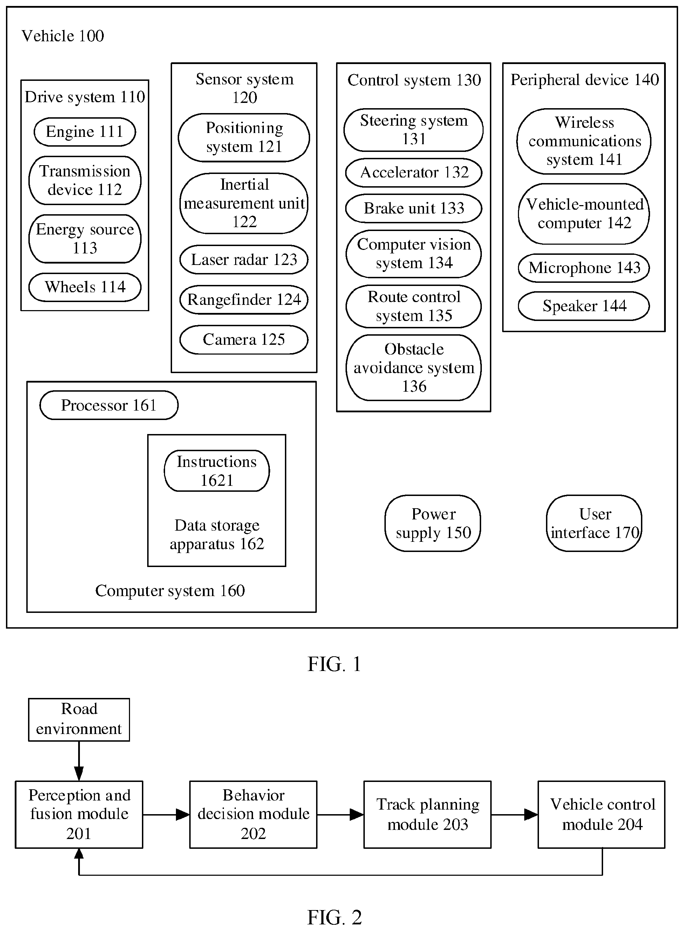

FIG. 1 is a schematic diagram of a structure of an autonomous vehicle according to an embodiment of this invention. Optionally, in an embodiment, a vehicle 100 may be configured to be in an autonomous driving mode. For example, when the vehicle 100 is in the autonomous driving mode, the vehicle 100 may control, based on vehicle control information, the vehicle to complete actions such as following, lane keeping, automatic parking, and obstacle avoidance. The vehicle control information is determined based on a dynamic model of the vehicle, a kinematic model of a road on which the vehicle is located, a tire friction model of the vehicle, and status information of the vehicle.

The vehicle 100 may include various subsystems, such as a drive system 110, a sensor system 120, a control system 130, one or more peripheral devices 140, a power supply 150, a computer system 160, and a user interface 170. Optionally, the vehicle 100 may include more or fewer subsystems, and each subsystem may include a plurality of elements. In addition, each subsystem and element of the vehicle 100 may be interconnected in a wired or wireless manner.

The drive system 110 may include a component that powers the vehicle 100 for movement. In an embodiment, the drive system 110 may include an engine 111, a transmission device 112, an energy source 113, and wheels 114. The engine 111 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 111 may convert the energy source 113 into mechanical energy.

There are many types of the energy source 113, such as gasoline, diesel, other petroleum-based fuel, propane, other compressed gas-based fuel, anhydrous alcohol, solar panels, batteries, and other power sources. The energy source 113 may also provide energy for another subsystem of the vehicle 100.

The transmission device 112 may transmit mechanical power from the engine 111 to the wheels 114 to change rotational speeds of the wheels 114, and the like. The transmission device 112 may include at least one of devices such as a gearbox, a differential, and a drive shaft, and the drive shaft may be coupled to one or more axes of one or more wheels 114. In an embodiment, the transmission device 112 may further include another device, for example, a clutch.

The sensor system 120 may include several sensors that sense ambient environment information of the vehicle 100. For example, the sensor system 120 includes at least one of a positioning system 121 (such as a GPS system, a BeiDou system, or another positioning system), an inertial measurement unit (inertial measurement unit, IMU) 122, a laser radar 123, a rangefinder 124, a camera 125, and the like. The sensor system 120 further includes sensors (for example, an in-vehicle air quality monitor, a fuel gauge, and an oil temperature gauge) in an internal system of the vehicle 100. One or more pieces of sensor data collected by these sensors may be used to detect an object and its corresponding characteristics (location, shape, direction, speed, and the like). The detection and identification is a key to implement safe operations of the vehicle 100.

The positioning system 121 may be configured to estimate a geographical location of the vehicle 100. The IMU 122 is configured to sense location and orientation changes of the vehicle 100 based on inertial acceleration. In an embodiment, the IMU 122 may be a combination of an accelerometer and a gyroscope.

The laser radar 123 may sense an object in an ambient environment of the vehicle 100 by using a laser. In some embodiments, in addition an object, the laser radar 123 may be further configured to sense a location, a speed, and/or a heading direction of the object.

The rangefinder 124 may be configured to sense a distance between the vehicle 100 and an object in the ambient environment of the vehicle 100.

The camera 125 may be configured to capture a plurality of images of the ambient environment of the vehicle 100. The camera 125 may be a static camera or a video camera.

The control system 130 may control operations of the vehicle 100 and its components. The control system 130 may include various elements such as at least one of a steering system 131, an accelerator 132, a brake unit 133, a computer vision system 134, a route control system 135, and an obstacle avoidance system 136.

The steering system 131 is configured to adjust a heading direction of the vehicle 100 based on a front wheel steering angle change rate. For example, the steering system 131 may be a steering wheel system.

The accelerator 132 further controls a speed of the vehicle 100 by controlling an operating speed of the engine 111.

The brake unit 133 is configured to control the vehicle 100 to decelerate, and the brake unit 133 may reduce the rotational speed of the wheel 114 by using a friction force. Optionally, the brake unit 133 may reduce the rotational speed of the wheel 114 by converting a kinetic energy of the wheel 114 into a current, or the brake unit 133 may reduce the rotational speed of the wheel 114 in another form, to control the speed of the vehicle 100.

The computer vision system 134 may process and analyze an image captured by the camera 125, to recognize an object and/or an object feature in the ambient environment of the vehicle 100. The object and/or the object feature in the ambient environment of the vehicle 100 includes a traffic signal, a road boundary, an obstacle, and the like. In some embodiments, the computer vision system 134 may complete operations such as drawing an environment map, tracking an object, and estimating an object speed by using at least one of an object identification algorithm, a structure from motion (structure from motion, SFM) algorithm, video tracking, or another computer vision technology.

The route control system 135 is configured to determine vehicle control information that controls a motion of the vehicle 100. In some embodiments, the route control system 135 may determine the vehicle control information for the vehicle 100 in combination with sensor data from the sensor system 120 and one or more pieces of predetermined map data, to control a vehicle motion based on the vehicle control information.

The obstacle avoidance system 136 is configured to identify and evaluate an obstacle and plan a manner to cross a potential obstacle in the ambient environment of the vehicle 100, such as making a detour for avoidance, following, and decelerating.

Certainly, optionally, the control system 130 may add another component other than the foregoing components, or may reduce a part of the foregoing components, or replace the foregoing components with other components.

The vehicle 100 interacts with the peripheral device 140 such as an external sensor, another vehicle, or another computer system through the user interface 170. The peripheral device 140 may include at least one of a wireless communications system 141, a vehicle-mounted computer 142, a microphone 143, a speaker 144, and/or another peripheral device. For example, the vehicle-mounted computer 142 may provide information for the vehicle 100 or a user of the vehicle 100 by using the user interface 170, and receive information from the vehicle 100 or the user of the vehicle 100. In some embodiments, the vehicle-mounted computer 142 may be operated by using a touchscreen. In another case, the user interface 170 may further provide a means for the vehicle 100 to communicate with another device located in the vehicle 100. For example, the microphone 143 may receive audio (for example, a voice command or another audio input) from the user of the vehicle 100 through the user interface 170. Similarly, the speaker 144 may output audio to the user of the vehicle 100 through the user interface 170.

The wireless communications system 141 may be configured to communicate wirelessly with one or more devices over a communications network or directly. For example, the wireless communications system 141 may use 3G cellular communication such as CDMA, EVD0, GSM/GPRS, or 4G cellular communication such as LTE, or 5G cellular communication, or the wireless communications system 141 may use Wi-Fi or another wireless protocol to communicate with a wireless local area network (wireless local area network, WLAN). In some embodiments, the wireless communications system 141 may communicate directly with devices such as various vehicle communications systems through an infrared link, Bluetooth, or ZigBee. Optionally, the wireless communications system 141 may include one or more dedicated short range communications (dedicated short range communications, DSRC) devices.

The power supply 150 may supply power to various components of the vehicle 100. In an embodiment, the power supply 150 may be a rechargeable lithium ion or lead-acid battery, and one or more battery packs of such batteries are configured as a power supply to provide power to various components of the vehicle 100. In some embodiments, for example, in some all-electric, the power supply 150 and the energy source 113 may be implemented together.

Some or all of functions of the vehicle 100 are controlled by the computer system 160. The computer system 160 may include at least one processor 161. The processor 161 executes instructions 1621 stored in a non-transitory computer-readable medium such as a data storage apparatus 162. The computer system 160 may further control a plurality of computer devices in an individual component or subsystem of the vehicle 100 in a distributed manner. The processor 161 may be any conventional processor, such as a commercially available central processing unit (central processing unit, CPU). Optionally, the processor may be a dedicated device of an application specific integrated circuit (application specific integrated circuit, ASIC) or another hardware-based processor. Although FIG. 1 functionally shows a processor, a memory, and other elements in a same physical housing, a person of ordinary skill in the art should understand that the processor, the computer system, or the memory may actually include a plurality of processors, computer systems, or memories that may be stored in the same physical housing, or may include a plurality of processors, computer systems, or memories that may not be stored in the same physical housing. For example, the memory may be a hard disk drive or another storage medium located in a different physical housing. Therefore, references to the processor or the computer system will be understood as including references to a set of processors or computer systems or memories that can be operated in parallel, or references to a set of processors or computer systems or memories that may not be operated in parallel. Unlike using a single processor to perform the steps described herein, some components, such as a steering component and a deceleration component, may have respective processors. The processor performs only calculation related to component-specific functions.

In various aspects described herein, the processor may be remote from the vehicle and communicate wirelessly with the vehicle. In another aspect, some of processes described herein are performed by a processor disposed in the vehicle, and others are performed by a remote processor, including taking necessary steps to perform a single operation.

In some embodiments, the data storage apparatus 162 may include the instructions 1621 (for example, program logic), and the instructions 1621 may be executed by the processor 161 to perform various functions of the vehicle 100, including those functions described above. The data storage apparatus 162 may also include additional instructions, including instructions to send data to, receive data from, interact with, and/or control one or more of the drive system 110, the sensor system 120, the control system 130, and the peripheral device 140.

In addition to the instructions 1621, the data storage apparatus 162 may further store data, such as a road map, route information, a location and/or a direction and/or a speed of the vehicle 100, data of another vehicle, and other information. When the vehicle 100 is in an autonomous, semi-autonomous, and/or manual driving mode, the data and the related information may be used by the vehicle 100 and the computer system 160.

For example, in a possible embodiment, the data storage apparatus 162 may obtain information such as a distance between another vehicle and the vehicle, shape information of the another vehicle, and a speed of the another vehicle that are obtained by the vehicle based on a speed measurement function and a distance measurement function of the laser radar 123. The data storage apparatus 162 may further obtain environment information from the sensor system 120 or another component of the vehicle 100. The environment information may be, for example, whether there is a green belt, a lane, or a pedestrian in an environment in which the vehicle is currently located. Alternatively, the vehicle calculates, according to a machine learning algorithm, whether there is a green belt, a pedestrian, or the like in an environment in which the vehicle is currently located. In addition to the foregoing content, the data storage apparatus 162 may further store status information of the vehicle and status information of another vehicle that interacts with the vehicle. The status information of the vehicle includes but is not limited to a speed, an acceleration, a heading angle, and the like of the vehicle. In this way, the processor 161 may obtain the information from the data storage apparatus 162, obtain the vehicle control information including a front wheel steering angle change rate and a wheel torque based on the environment information of the environment in which the vehicle is located such as information about a road on which the vehicle is located, the status information of the vehicle, the status information of another vehicle, a dynamic model of the vehicle, a kinematic model of the road on which the vehicle is located, and a tire friction model, and control autonomous driving of the vehicle 100 based on the front wheel steering angle change rate and the wheel torque.

The user interface 170 is configured to provide information for or receive information from the user of the vehicle 100. Optionally, the user interface 170 may interact with one or more input/output devices in a set of peripheral devices 140, such as one or more of the wireless communications system 141, the vehicle-mounted computer 142, the microphone 143, and the speaker 144.

The computer system 160 may control the vehicle 100 based on information obtained from various subsystems (for example, the drive system 110, the sensor system 120, and the control system 130) and information received from the user interface 170. For example, the computer system 160 may control the steering system 131 to change the heading direction of the vehicle based on information such as the front wheel steering angle change rate from the control system 130, to avoid obstacles detected by the sensor system 120 and the obstacle avoidance system 136. In some embodiments, the computer system 160 may control the vehicle 100 and the subsystems of vehicle 100 in many aspects.

Optionally, one or more of the foregoing components may be installed separately from or associated with the vehicle 100. For example, the data storage apparatus 162 may partially or completely separated from the vehicle 100. The foregoing components may be coupled together for communication in a wired and/or wireless manner.

Optionally, the foregoing components are merely examples. During actual application, components in the foregoing modules may be added or removed based on an actual requirement. FIG. 1 should not be construed as a limitation on this embodiment of this invention.

An autonomous vehicle such as the vehicle 100 traveling on a road may determine an adjustment instruction for a current speed, a front wheel steering angle, and a wheel torque based on another vehicle in an ambient environment of the autonomous vehicle. An object in the ambient environment of the vehicle 100 may be a traffic control device, a green belt, or another type of object. In some examples, each object in the ambient environment may be independently considered, and an adjustment instruction for a speed, a front wheel steering angle, and a wheel torque of the vehicle 100, or a vehicle driving control value, is determined based on respective features of the object, such as a current speed, an acceleration, and a distance between the object and the vehicle.

Optionally, the vehicle 100 as an autonomous vehicle or a computing device (such as the computer system 160, the computer vision system 134, and the data storage apparatus 162 in FIG. 1) associated with the vehicle 100 may control a motion of the vehicle based on shape information of a recognized object and a condition (for example, traffic, rain, or ice on a road) of the ambient environment. Optionally, each recognized object depends on behavior of each other. Therefore, all recognized objects may be considered together to predict behavior of a single recognized object. The vehicle 100 can adjust the vehicle control information of the vehicle 100 based on predicted behavior of the recognized objects. In other words, the autonomous vehicle can determine, based on an obstacle, the road information, the status information of the vehicle, and the like, a stable state (for example, acceleration, deceleration, or parking) to which the vehicle needs to be adjusted. In this process, other factors such as a location of the vehicle 100 on a traveling road, a curvature of the road, statics, and a distance between an obstacle and the vehicle may also be considered to determine the adjustment instruction for the speed, the front wheel steering angle, and a wheel torque of the vehicle 100.

The computer device may provide an instruction for modifying the front wheel steering angle change rate, the wheel torque, and the speed of the vehicle 100, so that the autonomous vehicle maintains safe lateral and longitudinal distances between the autonomous vehicle and a nearby object (for example, a car in an adjacent lane).

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this invention.

In some other embodiments of this invention, the autonomous vehicle may further include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Refer to FIG. 2. In the conventional technology, for example, a vehicle may include the following modules:

The perception and fusion module 201 is configured to obtain information about a vehicle, a pedestrian, and a road surface object in a road environment by using a roadside sensor and an in-vehicle sensor. In an autonomous driving process, the vehicle needs to fully sense an ambient environment, especially another vehicle target around the vehicle. The roadside sensor and the in-vehicle sensor may be a camera, a laser radar, a millimeter-wave radar, or the like. Data obtained by the perception and fusion module 201 may be a collected raw video stream or radar point cloud data. The perception and fusion module 201 may process the raw video stream data and the radar point cloud data into identifiable data such as locations, speeds, steering angles, and sizes of a structured person, vehicle, and object, and transfer the data to a behavior decision module 202, to provide more refined and accurate information for decision planning of the autonomous vehicle, so as to generate a behavior decision (for example, lane changing, overtaking, following, decelerating, or parking).

The behavior decision module 202 is a conventional control module of the autonomous vehicle. A function of the module is to generate a behavior decision (for example, lane changing, overtaking, following, decelerating, or parking) based on data such as road information, vehicle status information (including vehicle location information), and obstacle information (including an obstacle location) that are received from the perception and fusion module 201, and send the behavior decision to a track planning module.

The track planning module 203 is configured to perform path planning based on the behavior decision obtained from the behavior decision module 202 with reference to related environment information, including the vehicle status information, the road information, the obstacle information, and the like, to determine a collision-free path, and send the path to a vehicle control module 204.

The vehicle control module 204 is configured to perform track tracking based on the path received from the track planning module 203, to determine a specific control instruction. The control instruction is used to control the vehicle to travel according to the path, to ensure safety of the vehicle and implement autonomous driving of the vehicle. Optionally, the vehicle control module 204 is further configured to: after determining the control instruction, determine, based on a kinematic model, a dynamic model, or the like of the vehicle, status information obtained after the vehicle travels according to the path, and send the status information to the perception and fusion module 201. The status information of the vehicle includes a location of the vehicle, a yaw angle of the vehicle, a yaw angular velocity of the vehicle, a front wheel steering angle, a centroid side slip angle of the vehicle, and the like.

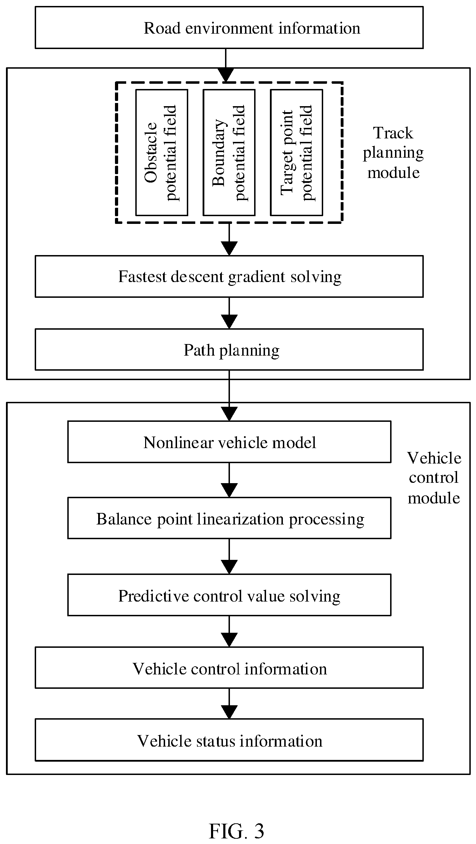

For example, as shown in FIG. 3, a path planning method based on an artificial potential field method is used as an example. The track planning module 203 obtains road environment information (including obstacle information), and then constructs, based on the obtained information, virtual potential fields around the vehicle, including an obstacle potential field, a boundary potential field, and a target point potential field. The obstacle potential field and the boundary potential field are repulsive fields, and the target point potential field is a gravitational field. Then, the planned path is generated based on a gradient descent direction obtained after the repulsive fields and the gravitational field are superimposed. That is, a motion of the vehicle in an ambient environment is abstracted as a motion in a gravitational field by using a fastest descent gradient solving method, to determine the planned path, and the planned path is sent to the vehicle control module 204. After receiving the planned path from the track planning module 203, the vehicle control module 204 performs balance point linearization processing and predictive control value solving based on current vehicle status information, current vehicle control information, and a nonlinear vehicle model (for example, a kinematic model of the vehicle), to repeatedly solve to obtain vehicle control information, that is, the vehicle control information, so that the vehicle controls a vehicle motion based on the vehicle control information and the vehicle moves according to the planned path. Finally, the vehicle control module 204 determines status information of the vehicle after the motion ends according to the planned path, and sends the status information to the perception and fusion module 201.

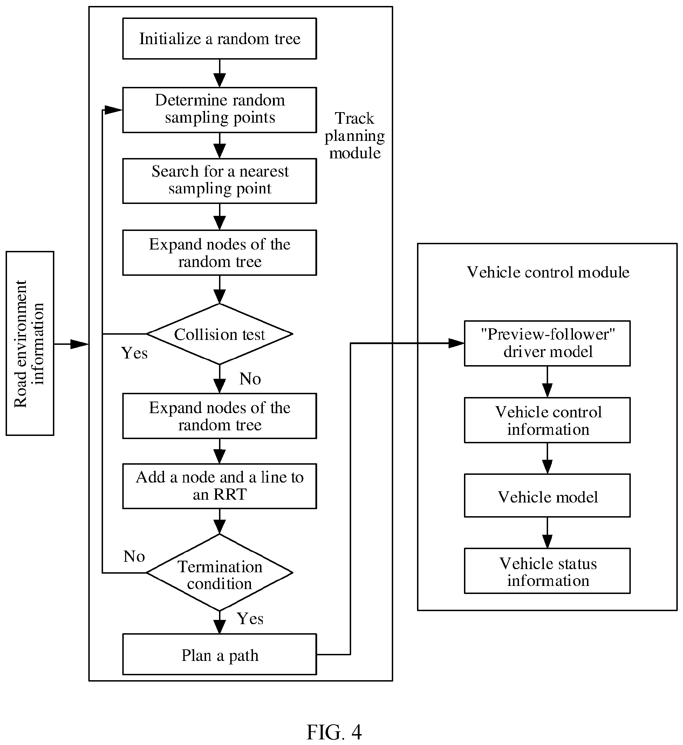

For example, as shown in FIG. 4, a path planning method based on a rapidly random-exploring tree (rapidly random-exploring tree, RRT) is used as an example. The track planning module 203 obtains road environment information (including obstacle information), and then samples nodes in space around the vehicle based on the obtained information and an initialized random tree, to determine random sampling points. Then, nodes of the random tree are expanded by searching for a sampling point closest to a start point in the random sampling points. Then, a collision test is performed. To be specific, it is detected whether a connection line between the start point/another node and a node collides with an obstacle area. If no collision occurs, the node and the connection line between the node and the start point/another node are added to the RRT. After all random sampling points are traversed, the planned path between the start point and a target point is determined based on the RRT, and the planned path is sent to the vehicle control module 204. Optionally, the vehicle control module 204 considers a front view of a driver based on a "preview-follower" driver model, and determines vehicle control information such as a steering wheel angle by calculating a deviation between a front-view point of the driver and an expected target point in the planned path. The vehicle control module 204 controls a motion of the vehicle based on the vehicle control information, so that the vehicle travels according to the planned path. The vehicle control module 204 determines status information after the motion of the vehicle according to the planned path ends, and sends the status information to the perception and fusion module 201.

Optionally, the perception and fusion module 201 is further configured to receive status information that is of the vehicle after the vehicle travels according to the planned path and that is sent by the vehicle control module 204, fuse the status information and information collected by another sensor, and send fused information to the behavior decision module 202.

A vehicle-mounted communications module (not shown in FIG. 2) is configured to exchange information between the vehicle and another vehicle.

A storage component (not shown in FIG. 2) is configured to store executable code of the foregoing modules. Some or all of method procedures in embodiments of this invention may be implemented by running the executable code.

In the conventional technology, the planned path is usually determined by using a rapidly random-exploring tree or an artificial potential field method. In the two path planning methods, a planned path may be inappropriate. For example, a front wheel steering angle that is determined according to the planned path in a traveling process of the vehicle is excessively large, and this violates a motion rule of the vehicle. Consequently, the vehicle cannot travel based on the front wheel steering angle. Alternatively, a front wheel steering angle change rate is unstable, and consequently, a traveling track of the vehicle is tortuous.

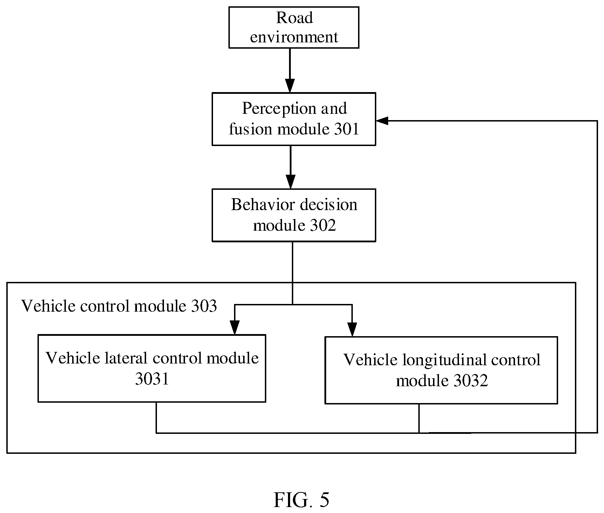

To resolve the foregoing problem, embodiments of this invention provide a schematic diagram of a structure of an autonomous vehicle. As shown in FIG. 5, in this embodiment, the vehicle may include the following modules: a perception and fusion module 301, a behavior decision module 302, a vehicle control module 303, an in-vehicle communications module, a storage component, and the like. For descriptions of the perception and fusion module 301 and the behavior decision module 302, refer to the foregoing descriptions of the perception and fusion module 201 and the behavior decision module 202. Details are not described herein again.

The vehicle control module 303 is configured to receive a behavior decision made by the behavior decision module 302, and determine status information of the vehicle based on the behavior decision. Then, the vehicle control module 303 is further configured to determine a value range of vehicle control information, that is, a value range of a wheel steering angle change rate of the vehicle and a value range of a wheel torque of the vehicle, based on the status information of the vehicle, a dynamic model of the vehicle, a kinematic model of a road on which the vehicle is located, a tire friction model of the vehicle, and the status information of the vehicle. The vehicle control module 303 is further configured to determine a value of the front wheel steering angle change rate of the vehicle based on the value range of the front wheel steering angle change rate of the vehicle and a lateral motion target function of the vehicle, and determine a value of the wheel torque of the vehicle based on the value range of the wheel torque of the vehicle and a longitudinal motion target function of the vehicle. The vehicle control module 303 is further configured to control a motion of the vehicle based on the value of the front wheel steering angle change rate of the vehicle and the value of the wheel torque of the vehicle, determine status information of the vehicle after the motion ends, and send the status information to the perception and fusion module 301.

Optionally, the vehicle control module 303 may be divided into a vehicle lateral control module 3031 and a vehicle longitudinal control module 3032. The vehicle lateral control module 3031 is configured to determine the value range of the front wheel steering angle change rate of the vehicle based on a lateral dynamic model of the vehicle, the kinematic model of the road on which the vehicle is located, the tire friction model of the vehicle, and the status information of the vehicle. The vehicle lateral control module 3031 is further configured to determine the value of the front wheel steering angle change rate of the vehicle based on the lateral motion target function of the vehicle and the value range of the front wheel steering angle change rate of the vehicle. The vehicle lateral control module 3031 is further configured to control the motion of the vehicle based on the value of the front wheel steering angle change rate of the vehicle. The vehicle longitudinal control module 3032 is configured to determine the value range of the wheel torque of the vehicle based on a longitudinal dynamic model of the vehicle, the tire friction model of the vehicle, and the status information of the vehicle. The vehicle longitudinal control module 3032 is further configured to determine the value of the wheel torque of the vehicle based on the value range of the wheel torque of the vehicle. The vehicle longitudinal control module 3032 is further configured to control the motion of the vehicle based on the value of the wheel torque of the vehicle. The vehicle lateral control module 3031 and the vehicle longitudinal control module 3032 are further configured to: after the vehicle ends the motion, determine status information of the vehicle, and send the status information to the perception and fusion module 301.

It should be noted that, in the foregoing process, when the value range of the vehicle control information is determined, the dynamic model of the vehicle, the kinematic model of the road on which the vehicle is located, and the tire friction model of the vehicle are considered, so that the finally determined vehicle control information better complies with a motion rule of the vehicle. This resolves a problem that a planned path is inappropriate in the conventional technology.

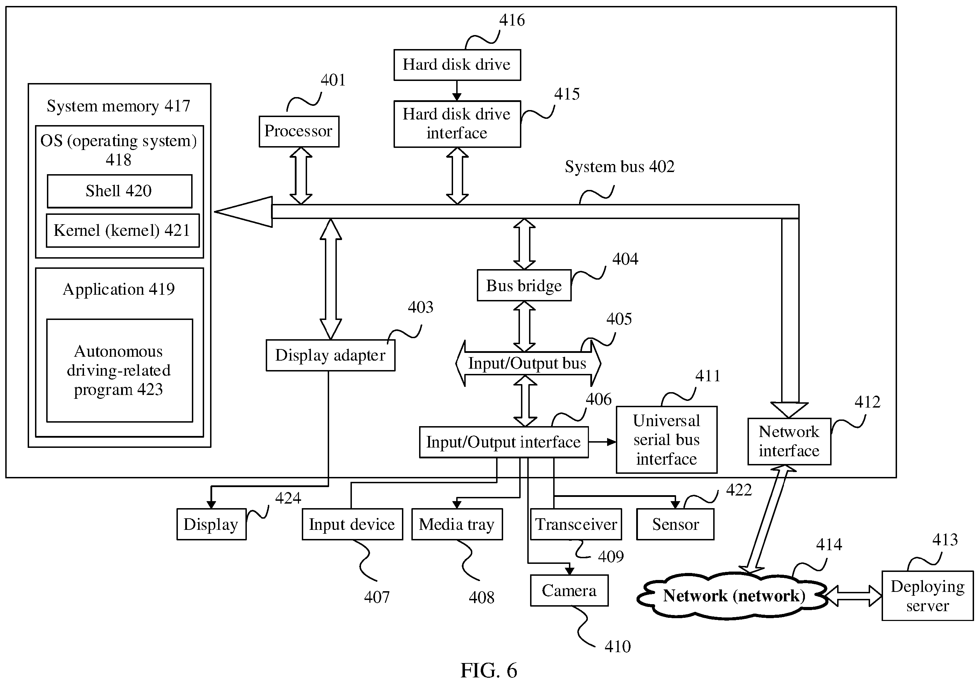

In a possible implementation of this embodiment of this invention, as shown in FIG. 6, the computer system 160 shown in FIG. 1 includes a processor 401. The processor 401 is coupled to a system bus 402. The processor 401 may be one or more processors, and each processor may include one or more processor cores. A video adapter (video adapter) 403 may drive a display 424, and the display 424 is coupled to the system bus 402. The system bus 402 is coupled to an input/output (I/O) bus (BUS) 405 through a bus bridge 404, an I/O interface 406 is coupled to the I/O bus 405. The I/O interface 406 communicates with a plurality of types of I/O devices such as an input device 407 (for example, a keyboard, a mouse, and a touchscreen) and a media tray (media tray) 408 (for example, a CD-ROM and a multimedia interface). A transceiver 409 (which may send and/or receive a radio communication signal), a camera 410 (which may capture static and dynamic digital video images), and an external universal serial bus (universal serial bus, USB) interface 411 exist. Optionally, an interface connected to the I/O interface 406 may be a USB interface.

The processor 401 may be any conventional processor, including a reduced instruction set computer (Reduced Instruction Set Computer, RISC) processor, a complex instruction set computer (Complex Instruction Set Computer, CISC) processor, or a combination thereof. Optionally, the processor 401 may alternatively be a dedicated apparatus such as an application-specific integrated circuit (ASIC). Optionally, the processor 401 may alternatively be a neural network processor or a combination of a neural network processor and the foregoing conventional processor.

Optionally, in various embodiments of this invention, the computer system 160 may be located away from the autonomous vehicle and communicate wirelessly with the autonomous vehicle 100. In another aspect, some processes of this invention may be set to be executed on a processor in the autonomous vehicle, and some other processes are executed by a remote processor, including taking a necessary action to perform a single operation.

The computer system 160 may communicate with a deploying server (deploying server) 413 through a network interface 412. Optionally, the network interface 412 may be a hardware network interface, for example, a network adapter. A network (network) 414 may be an external network such as the internet, or may be an internal network such as the Ethernet or a virtual private network (VPN). Optionally, the network 414 may be a wireless network such as a Wi-Fi network or a cellular network.

A hard disk drive interface 415 is coupled to the system bus 402. The hard disk drive interface 415 is connected to a hard disk drive 416. A system memory 417 is coupled to the system bus 402. Data running in the system memory 417 may include an operating system (OS) 418 and an application 419 of the computer system 160.

The operating system (OS) 418 includes, but is not limited to, a shell 420 and a kernel (kernel) 421. The shell 420 is an interface between a user and the kernel 421 of the operating system 418. The shell 420 is an outermost layer of the operating system 418. The shell manages interaction between the user and the operating system 418: waiting for an input from the user, interpreting the input from the user to the operating system 418, and processing various output results of the operating system 418.

The kernel 421 includes a part that is in the operating system 418 and that is used to manage a memory, a file, a peripheral, and system resources, and directly interacts with hardware. The kernel 421 of the operating system 418 usually runs processes, provides communication between the processes, and provides functions such as CPU time slice management, interruption, memory management, and I/O management.

The application 419 includes a program 423 related to autonomous driving, for example, a program managing interaction between an autonomous vehicle and an obstacle on a road, a program controlling vehicle control information or a speed of the autonomous vehicle, or a program controlling interaction between the autonomous vehicle and another vehicle/autonomous vehicle on the road. The application 419 also exists in a system of the deploying server 413. In an embodiment, when the application 419 needs to be executed, the computer system 160 may download the application 419 from the deploying server 413.

For another example, the application 419 may be an application program that controls the vehicle to determine the vehicle control information based on a dynamic model of the vehicle, a kinematic model of a road on which the vehicle is located, a tire friction model of the vehicle, a motion status of the vehicle, a lateral motion target function of the vehicle, a longitudinal motion target function of the vehicle, and a vehicle control module. The processor 401 of the computer system 160 invokes the application 419 to obtain the vehicle control information.

A sensor 422 is associated with the computer system 160. The sensor 422 is configured to detect an ambient environment of the computer system 160. For example, the sensor 422 may detect an animal, a car, an obstacle, and/or a sidewalk. Further, the sensor 422 may detect an ambient environment of the foregoing object such as an animal, a car, an obstacle, and/or a sidewalk. For example, an ambient environment of an animal includes, for example, another animal that appears around the animal, a weather condition, and brightness of the ambient environment of the animal. Optionally, if the computer system 160 is located on the autonomous vehicle, the sensor 422 may be at least one of a camera, an infrared sensor, a chemical detector, a microphone, and the like.

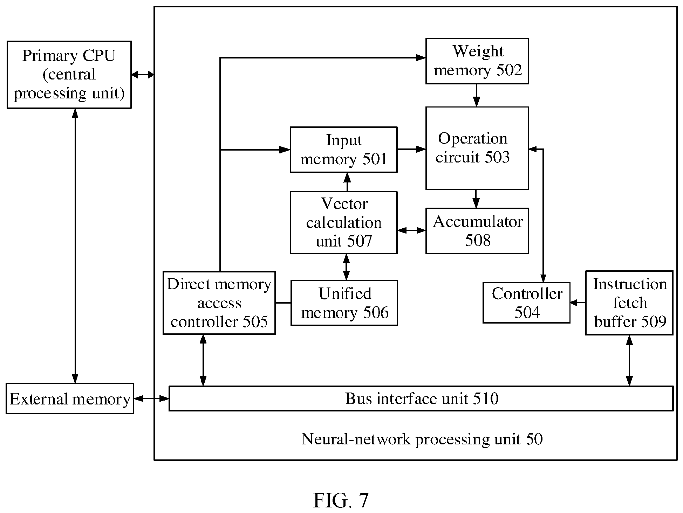

In some other embodiments of this invention, the vehicle control method in embodiments of this invention may further be performed by a chip system. FIG. 7 is a diagram of a structure of a chip system according to an embodiment of this invention.

A neural-network processing unit (neural-network processing unit, NPU) 50 is mounted on a host CPU (host CPU) as a coprocessor, and the host CPU allocates a task to the NPU 50. A core part of the NPU 50 is an operation circuit 503. For example, the controller 504 controls the operation circuit 503, so that the operation circuit 503 performs a multiplication operation by using matrix data extracted from a memory.

In some implementations, the operation circuit 503 internally includes a plurality of process elements (process engine, PE). In some implementations, the operation circuit 503 is a two-dimensional systolic array. Optionally, the operation circuit 503 may alternatively be a one-dimensional systolic array or another electronic circuit that can perform mathematical operations such as multiplication and addition. In some implementations, the operation circuit 503 is a general-purpose matrix processor.

For example, it is assumed that there are an input matrix A, a weight matrix B, and an output matrix C. The operation circuit 503 obtains data corresponding to the weight matrix B from a weight memory 502 and buffers the data in each PE of the operation circuit 503. The operation circuit 503 further obtains data corresponding to the input matrix A from an input memory 501, performs a matrix operation based on the input matrix A and the weight matrix B, and stores a partial result or a final result of the matrix operation in an accumulator (accumulator) 508.

For another example, the operation circuit 503 may be configured to implement a feature extraction model (for example, a convolutional neural network model), input image data into the convolutional neural network model, and obtain an image feature by performing an operation using the model. Further, the image feature is output to a classifier, and the classifier outputs a classification probability of an object in an image.

A unified memory 506 is configured to store input data and output data. Weight data in an external memory is directly sent to the weight memory 502 by using a direct memory access controller (direct memory access controller, DMAC) 505. Input data in the external memory may be moved to the unified memory 506 or to the input memory 501 by using the DMAC.

A bus interface unit (bus interface unit, BIU) 510 is configured to interact with an advanced extensible interface (advanced extensible interface, AXI) bus, a DMAC, and an instruction fetch buffer (instruction fetch buffer) 509. The bus interface unit 510 is further used by the instruction fetch buffer 509 to obtain instructions from the external memory, and is further used by the direct memory access controller 505 to obtain raw data of the input matrix A or the weight matrix B from the external memory.

The DMAC is mainly configured to move the input data in the external memory (DDR) to the unified memory 506, or move the weight data to the weight memory 502, or move the input data to the input memory 501.

For example, in embodiments of this invention, if a DQN model is used to calculate data such as a target category, target shape information, and target tracking information corresponding to a target, the input data may be input data of the DQN model, to be specific, information such as laser radar point cloud data of a target object (for example, another vehicle that interacts with the vehicle) in an ambient environment of the vehicle. The output data is output data of the DQN model, that is, data such as a category type, target shape information, and target tracking information of the target in the ambient environment of the vehicle.

A vector calculation unit 507 may include a plurality of operation processing units. The vector calculation unit 507 may be configured to further process an output of the operation circuit 503, such as vector multiplication, vector addition, exponential operation, logarithm operation, and size comparison when necessary. The vector calculation unit 507 is mainly used for neural network non-convolution/FC layer network calculation, such as pooling (Pooling), batch normalization (Batch Normalization), and local response normalization (Local Response Normalization).

In some implementations, the vector calculation unit 507 stores a processed output vector into the unified memory 506. For example, the vector calculation unit 507 may apply a non-linear function to an output, for example, a vector of an accumulated value, of the operation circuit 503 to generate an activation value. In some implementations, the vector calculation unit 507 generates a normalized value or a combined value or both. In some implementations, the processed output vector can also be used as an activation input to the operation circuit 503, for example, for use at a subsequent layer in the neural network.

The controller 504 is connected to the instruction fetch buffer (instruction fetch buffer) 509, and instructions used by the controller 504 may be stored in the instruction fetch buffer 509.

In a possible implementation, the unified memory 506, the input memory 501, the weight memory 502, and the instruction fetch buffer 509 are all on-chip memories. The external memory is private for a hardware architecture of the NPU 50.

With reference to FIG. 1, FIG. 5, and FIG. 6, the host CPU and the NPU 50 may cooperate to implement a corresponding algorithm of a function required by the vehicle 100 in FIG. 1, or may implement a corresponding algorithm of a function required by the vehicle shown in FIG. 5, or may implement a corresponding algorithm of a function required by the computer system 160 shown in FIG. 6.

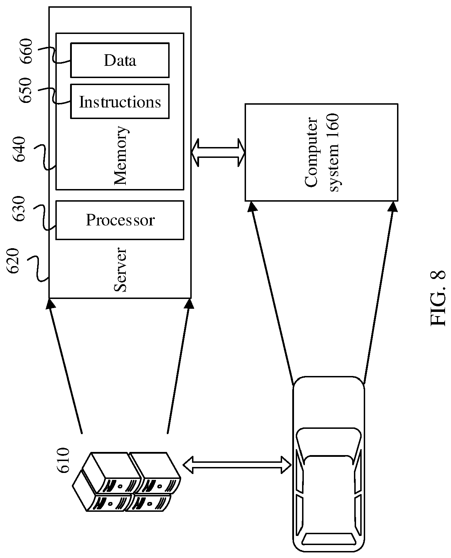

In some other embodiments of this invention, the computer system 160 may further receive information from or transfer information to another computer system. Alternatively, sensor data collected from the sensor system 120 of the vehicle 100 may be transferred to another computer, and the another computer processes the data. As shown in FIG. 8, data from the computer system 160 may be transmitted through a network to a cloud-side computer system 610 for further processing. The network and an intermediate node may include various configurations and protocols, including the internet, the World Wide Web, an intranet, a virtual private network, a wide area network, a local area network, a dedicated network using a proprietary communication protocol of one or more companies, the Ethernet, Wi-Fi, HTTP, and various combinations thereof. Such communication may be performed by any device capable of transmitting data to and from another computer, such as a modem and a wireless interface.

In an example, the computer system 610 may include a server having a plurality of computers, such as a load balancing server cluster. To receive data from the computer system 160, process the data, and transmit the data, the server 620 exchanges information with different nodes of the network. The computer system 610 may have a configuration similar to that of the computer system 160, and have a processor 630, a memory 640, instructions 650, and data 660.

In an example, the data 660 of the server 620 may include information related to a road environment, a vehicle, and the like. For example, the server 620 may receive, monitor, store, update, and transmit various information related to an obstacle, a vehicle, and a road environment in an ambient environment. The information may include, for example, obstacle information, vehicle status information, and road information in a report form, a radar information form, or a prediction form.

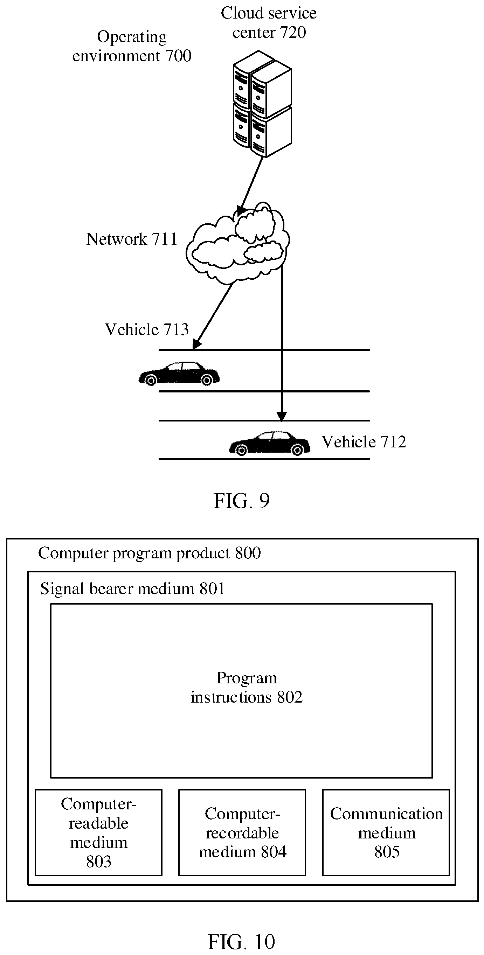

FIG. 9 is an example of interaction between an autonomous vehicle and a cloud service center (cloud server). The cloud service center may receive information (such as data collected by a vehicle sensor or other information) from autonomous vehicles 713 and 712 within an operating environment 700 of the cloud service center through a network 711 such as a wireless communications network.

The cloud service center 720 runs, based on received data, a related program controlling autonomous driving of a vehicle stored in the cloud service center 720, to control the autonomous vehicles 713 and 712. The related program controlling autonomous driving of a vehicle may be a program managing interaction between an autonomous vehicle and an obstacle on a road, a program controlling a motion or a speed of the autonomous vehicle, or a program controlling interaction between the autonomous vehicle and another autonomous vehicle on a road.

For example, the cloud service center 720 may provide a part of a map to the vehicles 713 and 712 by using the network 711. In another example, operations may be divided between different locations. For example, a plurality of cloud service centers may receive, acknowledge, combine, and/or send information reports. In some examples, information reports and/or sensor data may also be sent between vehicles. Another configuration is also possible.

In some examples, the cloud service center 720 may send, to the autonomous vehicle, a recommended solution (for example, informing a front obstacle and how to bypass it) about a possible driving situation in an environment. For example, the cloud service center 720 may assist the vehicle in determining how to travel when there is a specific obstacle ahead in the environment. The cloud service center 720 may send, to the autonomous vehicle, a response indicating how the vehicle should travel in a given scenario. For example, the cloud service center 720 may confirm, based on the collected sensor data, that there is a temporary park sign on a road ahead, and for another example, determine, based on a "lane closed" sign and sensor data of a construction vehicle, that the lane is closed due to construction. Correspondingly, the cloud service center 720 sends a suggested operation mode (for example, indicating the vehicle to change lanes onto another road) for the vehicle to pass through the obstacle. When the cloud service center 720 observes a video stream in an operating environment 700 of the cloud service center 720 and determines that the autonomous vehicle can safely and successfully pass through the obstacle, operation steps used for the autonomous vehicle may be added to a driving information map. Correspondingly, this information may be sent to other vehicles that may encounter a same obstacle in the region, to assist the other vehicles not only in recognizing the closed lane but also in knowing how to pass.

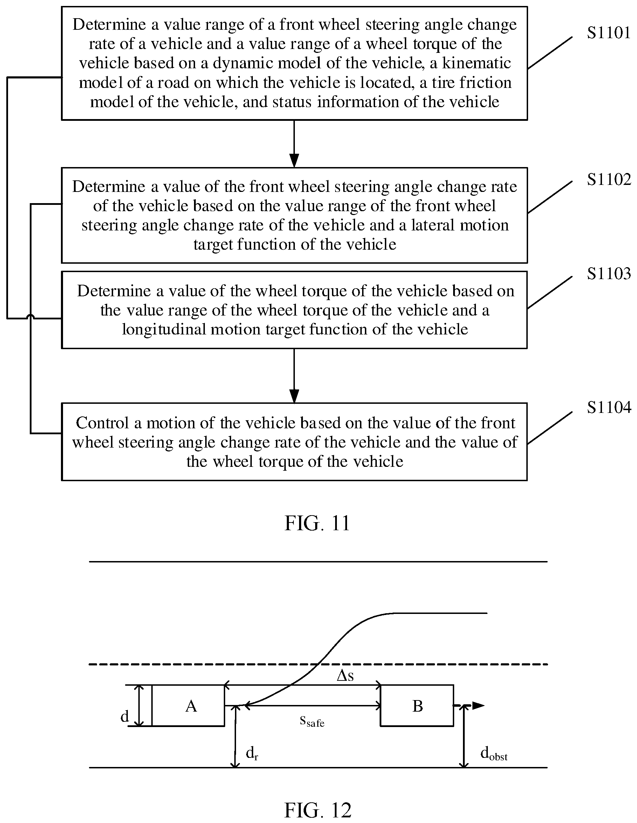

In some embodiments, the disclosed method may be implemented as a computer program instruction encoded on a computer-readable storage medium or encoded on another non-transitory medium or article in a machine readable format. FIG. 10 schematically shows a conceptual partial view of an example computer program product arranged according to at least some embodiments shown herein, and the example computer program product includes a computer program for executing a computer process on a computing device. In an embodiment, an example computer program product 800 is provided by using a signal bearer medium 801. The signal bearer medium 801 may include one or more program instructions 802. When being run by one or more processors, the one or more program instructions 802 may provide all or some of the functions described in FIG. 1 and FIG. 5 to FIG. 9, or may provide all or some of functions described in subsequent embodiments. For example, refer to an embodiment shown in FIG. 11. One or more features of S1101 to S1104 may be carried by one or more instructions associated with the signal bearer medium 801. In addition, the program instructions 802 in FIG. 10 are also described as example instructions.

In some examples, the signal bearer medium 801 may include a computer-readable medium 803, for example, but not limited to, a hard disk drive, a compact disc (CD), a digital video disc (DVD), a digital tape, a memory, a read-only memory (Read-Only Memory, ROM), or a random access memory (Random Access Memory, RAM). In some implementations, the signal bearer medium 801 may include a computer-recordable medium 804, for example, but not limited to, a memory, a read/write (R/W) CD, or an R/W DVD. In some implementations, the signal bearer medium 801 may include a communication medium 805, for example, but is not limited to a digital and/or analog communication medium (for example, an optical fiber cable, a waveguide, a wired communication link, or a wireless communication link). Therefore, for example, the signal bearer medium 801 may be conveyed by a wireless-form communication medium 805 (for example, a wireless communication medium that complies with the IEEE 802.11 standard or another transmission protocol). The one or more program instructions 802 may be, for example, one or more computer-executable instructions or one or more logic implementation instructions. In some examples, a computing device described for FIG. 1 and FIG. 5 to FIG. 9 may be configured to provide various operations, functions, or actions in response to the program instructions 802 that are communicated to the computing device by using one or more of the computer-readable medium 803, and/or the computer-recordable medium 804, and/or the communication medium 805. It should be understood that the arrangement described herein is merely used as an example. Therefore, it may be understood by a person skilled in the art that other arrangements and other elements (for example, machines, interfaces, functions, sequences, and groups of functions) can be used instead, and that some elements may be omitted together based on an expected result. In addition, many of the described elements are functional entities that can be implemented as discrete or distributed components, or implemented in any suitable combination at any suitable location in combination with another component.

To resolve a problem that a planned path is inappropriate in the conventional technology, embodiments of this invention provide a vehicle control method. The method may be performed by the processor 161, the processor 401, the processor 630, or the like in the foregoing figure. As shown in FIG. 11, the method includes steps S1101 to S1104.

S1101: Determine a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle.

The dynamic model of the vehicle represents a change rule of a motion status of the vehicle, that is, a relationship between a force on the vehicle and a change of the motion status of the vehicle. The kinematic model of the road on which the vehicle is located represents a change rule of a location of the vehicle relative to a road edge of the road on which the vehicle is located, that is, a relationship between a road information change and the change of the motion status of the vehicle. The tire friction model of the vehicle represents a change rule of a tire friction force of the vehicle, that is, a relationship between a friction force on a tire of the vehicle and a slip rate. The wheel torque of the vehicle includes a wheel torque of front wheels of the vehicle and a wheel torque of rear wheels of the vehicle. In other words, the value range of the wheel torque includes a value range of the wheel torque of the front wheels of the vehicle and a value range of the wheel torque of the rear wheels of the vehicle.

Optionally, a vehicle-road dynamic model is first established based on the dynamic model of the vehicle, the kinematic model of the road on which the vehicle is located, and the tire friction model of the vehicle. The vehicle-road kinematic model represents an association relationship between the dynamic model of the vehicle and the kinematic model of the road. Then, a value range of vehicle control information, that is, the value range of the front wheel steering angle change rate and the value range of the wheel torque, is determined based on the status information of the vehicle and the vehicle-road kinematic model.

Optionally, the dynamic model of the vehicle may be classified into a lateral dynamic model and a longitudinal dynamic model. The lateral dynamic model represents a relationship between a lateral force on the vehicle and a change of a lateral motion status of the vehicle, and the longitudinal dynamic model represents a relationship between a longitudinal force on the vehicle and a change of a longitudinal motion status of the vehicle.

In a possible implementation, there is a coupling relationship between the lateral dynamic model of the vehicle and the longitudinal dynamic model of the vehicle. An association relationship between the lateral dynamic model of the vehicle and the kinematic model of the road on which the vehicle is located is established, and the association relationship may be reflected by using parameters in the models. The vehicle-road kinematic model is established based on the lateral dynamic model of the vehicle, the longitudinal dynamic model of the vehicle, the tire friction model, the kinematic model of the road on which the vehicle is located, the association relationship, and the coupling relationship.

In a possible implementation, the lateral dynamic model of the vehicle is a function about a change rate of a location (that is, a location of a centroid of the vehicle) of the vehicle, a change rate of a centroid side slip angle of the vehicle, a change rate of a yaw angle of the vehicle, a change rate of a yaw angular velocity of the vehicle, a change rate of a front wheel steering angle, and an association relationship between the change rates. The kinematic model of the road on which the vehicle is located is a function about a change rate of a distance between the vehicle and the road edge, a change rate of a heading angle of the road edge, a change rate of a length of the road edge, and an association relationship between the change rates. The longitudinal dynamic model of the vehicle is a function about a change rate of a longitudinal speed of the vehicle, a change rate of a front wheel angular velocity, a change rate of a rear wheel angular velocity (namely, a drive wheel angular velocity), and an association relationship between the change rates. The tire friction model of the vehicle is a function about a road adhesion coefficient, a longitudinal slip rate, a side slip angle of a tire, that is, a deviation angle of the tire from a longitudinal direction, and a tire vertical load.

Optionally, after the vehicle-road kinematic model is determined, a first value range of the front wheel steering angle change rate of the vehicle and a second value range of the wheel torque of the vehicle may be determined based on the model and the status information of the vehicle. The first value range is determined as the value range of the front wheel steering angle change rate of the vehicle, and the second value range is determined as the value range of the wheel torque of the vehicle.

The status information of the vehicle includes status information of the vehicle at a start point and status information of the vehicle at an end point. The start point is a location of the vehicle at an initial moment, and the end point is a location of the vehicle after a motion ends.

In a possible implementation, the status information of the vehicle at the initial moment is obtained by using a sensor, through calculation, and the like, and includes information such as a location of the start point, a speed of the vehicle at the initial moment, a centroid side slip angle of the vehicle at the initial moment, a yaw angle of the vehicle at the initial moment, a yaw angular velocity of the vehicle at the initial moment, a front wheel steering angle of the vehicle at the initial moment, a longitudinal angular velocity of the vehicle at the initial moment, a front wheel angular velocity of the vehicle at the initial moment, a rear wheel angular velocity of the vehicle at the initial moment, a location of an obstacle at the initial moment, a shape of the obstacle, and a speed of the obstacle at the initial moment. The behavior decision module 302 makes a behavior decision based on the information, to determine whether a vehicle motion is lane changing, overtaking, decelerating during following, parking, or the like, duration of the motion, or the like. Then, status information of the vehicle after the motion ends, including a location of the end point, is determined based on the behavior decision.

In a possible implementation, after the vehicle-road kinematic model is determined, a change rate of the status information of the vehicle after a period of time following the initial moment may be determined based on the model and the status information of the vehicle at the initial moment, and then status information of the vehicle within the period of time following the initial moment is predicted based on the change rate and the status information of the vehicle at the initial moment. Then, the first value range of the front wheel steering angle change rate of the vehicle and the second value range of the wheel torque of the vehicle are determined based on the predicted status information of the vehicle within the period of time following the initial moment and the status information of the vehicle after the motion ends. The first value range is determined as the value range of the front wheel steering angle change rate of the vehicle, and the second value range is determined as the value range of the wheel torque of the vehicle.

For example, the status information of the vehicle at the start point is $[X(t_0), Y(t_0), \beta(t_0), r(t_0), \delta(t_0), d_r(t_0), \theta_r(t_0), s_r(t_0), V_x(t_0), w_f(t_0), w_r(t_0)]^T = [X_{ini}, Y_{ini}, \beta_{ini}, r_{ini}, \delta_{ini}, d_{r,ini}, \theta_{r,ini}, s_{r,ini}, V_{x,ini}, w_{f,ini}, w_{r,ini}]^T$, where to represents the initial moment. X and Y represent a location of the vehicle, $\beta$ is a centroid side slip angle of the vehicle, $\theta$ is a heading angle of the vehicle, r is a yaw angular velocity of the vehicle, $\delta$ is a front wheel steering angle of the vehicle, $\theta_r$ is a heading angle of a road edge, that is, a road edge, $d_r$ is a distance between the vehicle and the road edge, $s_r$ is a length of the road edge, $V_x$ represents a longitudinal speed of the vehicle, $W_f$ represents a front wheel angular velocity of the vehicle, and $w_r$ represents a rear wheel angular velocity of the vehicle. A change rate of each parameter at the moment $t_0$ is obtained based on the vehicle-road kinematic model, to predict status information of the vehicle at a moment $t_1$, that is, a next moment of the initial moment. Therefore, a group of values of the front wheel steering angle change rate and a group of values of the wheel torque, that is, the first value range of the front wheel steering angle change rate and the second value range of the wheel torque, can be determined. Then, a change rate of each parameter at the moment $t_1$ is determined based on the status information of the vehicle at the moment $t_1$, to predict status information of the vehicle at a moment $t_2$, that is, a next moment of the moment $t_1$. Then, the foregoing process is cyclically performed until a vehicle status is iterated to the status information at an end moment. It is determined, based on the behavior decision made by the behavior decision module 302, that the status information of the vehicle at the end point is $[X(t_f), Y(t_f), \beta(t_f), r(t_f), \delta(t_f), d_r(t_f), \theta_r(t_f), s_r(t_f), V_x(t_f), w_f(t_f), w_r(t_f)]^T = [X_{targ}, Y_{targ}, \beta_{targ}, r_{targ}, \delta_{targ}, d_{r,targ}, \theta_{r,targ}, s_{r,targ}, V_{x,targ}, w_{f,targ}, w_{r,targ}]^T$, where $t_f$ represents the end moment.

It should be noted that the status information of the vehicle at the start point may be used as a start point of iterative update of the vehicle-road kinematic model, status information used for the iterative update is predicted status information, and an iterative update method may be a Runge-Kutta method, including a low-order Runge-Kutta method, a high-order Runge-Kutta method, and a medium-order Runge-Kutta method. Certainly, the vehicle-road kinematic model may alternatively be iteratively updated by using another method. In addition, the status information of the vehicle at the end point is constrained to determine a value range of the vehicle control information, so as to ensure safety of the vehicle at end moment of the motion of the vehicle.

Optionally, after the vehicle-road kinematic model is determined, a third value range of the front wheel steering angle change rate of the vehicle and a fourth value range of the wheel torque of the vehicle are determined based on a first constraint condition and the vehicle-road dynamic model. The third value range is determined as the value range of the front wheel steering angle change rate of the vehicle, and the fourth value range is determined as the value range of the wheel torque of the vehicle.

The first constraint condition is a value range of a distance between the road edge and the vehicle, and the first constraint condition is obtained based on the status information of the vehicle.

In a possible implementation, the status information of the vehicle includes a distance between the vehicle and an obstacle, a preset safe distance, a distance between the obstacle and the road edge, a width of the vehicle, and a width of the road. The preset safe distance is a preset distance between the vehicle and an obstacle. The preset safe distance may be preset by the user, or may be determined by the vehicle based on a current scenario. For example, when the vehicle runs at a high speed, the preset safe distance may be set to a large value. When the vehicle runs at a low speed or is stationary, the preset safe distance may be set to a small value.

For example, as shown in FIG. 12, the obstacle is another vehicle B. The first constraint condition is $d_{min} \leq d_r \leq d_{max}$ ( $d_{min} = d/2$, if $\Delta s > s_{safe}$; $d_{min} = d_{obst} + d$, if $\Delta s \leq s_{safe}$), where $d_{min}$ represents a minimum distance between a vehicle A and a road edge, $d_r$ represents a distance between the vehicle A and the road edge, $d_{max}$ represents a maximum distance between the vehicle A and the road edge, d is a width of the vehicle A, $\Delta s$ is a distance between the vehicle A and the obstacle, that is, a minimum distance between a point on the vehicle A and a point on the vehicle B, $s_{safe}$ is a preset safe distance between the vehicle A and the obstacle, and $d_{obst}$ represents a distance between the obstacle and the road edge. If the distance between the vehicle and the obstacle is less than or equal to the preset safe distance, it is determined, based on the width of the vehicle, that a minimum distance between the vehicle and the road edge is a half of the width of the vehicle, and a maximum distance between the vehicle and the road edge is a difference between the width of the road and a half of the width of the vehicle, to determine the value range of the distance between the vehicle and the road edge, that is, the first constraint condition. If the distance between the vehicle and the obstacle is greater than the preset safe distance, it is determined, based on the width of the vehicle, the width of the road, and the distance between the obstacle and the road edge, that a minimum distance between the vehicle and the road edge is a sum of the distance between the obstacle and the road edge and the width of the vehicle, and that a maximum distance between the vehicle and the road edge is a difference between the width of the road and a half of the width of the vehicle, to determine the value range of the distance between the vehicle and the road edge, that is, the first constraint condition.

In a possible implementation, possible values of the distance between the vehicle and the road edge in the first constraint condition are input into the vehicle-road kinematic model, and a group of values of the front wheel steering angle change rate of the vehicle and a group of values of the wheel torque of the vehicle, that is, the third value range of the front wheel steering angle change rate of the vehicle and the fourth value range of the wheel torque of the vehicle, may be determined based on an association relationship between parameters in the model.

In the foregoing process, the value range of the vehicle control information is determined based on the value range of the distance between the vehicle and the obstacle. This ensures a specific distance between the vehicle and the obstacle while the vehicle control information complies with a motion rule of the vehicle, to avoid a collision and resolve a problem that a planned path is inappropriate in the conventional technology.

To ensure that the vehicle is stable in a motion process and improve safety and comfort of autonomous driving of the vehicle, a value of a parameter in the status information of the vehicle and a value of a control value in the vehicle control information may be limited. Optionally, after the vehicle-road kinematic model is determined, a fifth value range of the front wheel steering angle change rate of the vehicle and a sixth value range of the wheel torque of the vehicle are determined based on a second constraint condition and the vehicle-road dynamic model. The fifth value range is determined as the value range of the front wheel steering angle change rate of the vehicle, and the sixth value range is determined as the value range of the wheel torque of the vehicle.

The second constraint condition is obtained based on the status information of the vehicle, and the second constraint condition includes a maximum longitudinal speed of the vehicle, a maximum front wheel steering angle of the vehicle, and a maximum front wheel steering angle change rate of the vehicle.

In a possible implementation, the status information of the vehicle includes the maximum longitudinal speed $Vx_{max}$ of the vehicle, the maximum front wheel steering angle $\delta_{max}$ of the vehicle, the maximum front wheel steering angle change rate $u_{max}$ of the vehicle, a maximum yaw angle of the vehicle, a maximum yaw angular acceleration of the vehicle, and the like.

For example, the second constraint condition includes $|V_x(t_i)| \leq V_{x,max}$, $|\delta(t_i)| \leq \delta_{max}$, and $|u(t_i)| \leq u_{max}$.

In a possible implementation, the second constraint condition further includes the maximum yaw angle $\varphi_{max}$ of the vehicle, the maximum yaw angular acceleration $r_{max}$ of the vehicle, and/or the like.

For example, the second constraint condition further includes $|\varphi(t_i)| \leq \varphi_{max}$ and/or $|r(t_i)| \leq r_{max}$.

In a possible implementation, possible values of parameters in the second constraint condition are input into the vehicle-road kinematic model, and a plurality of groups of values of the front wheel steering angle change rate of the vehicle and a plurality of groups of values of the wheel torque of the vehicle may be determined based on association relationships between parameters in the model. An intersection set of the plurality of groups of values of the front wheel steering angle change rate of the vehicle may be obtained, to obtain the third value range of the front wheel steering angle change rate of the vehicle. An intersection set of the plurality of groups of values of the wheel torque of the vehicle may be obtained, to obtain the fourth value range of the wheel torque of the vehicle.

It should be noted that, more parameters included in the second constraint condition indicate that a value range of the vehicle control information determined based on the second constraint condition better complies with a motion rule of the vehicle, and a problem that a planned path is inappropriate can be better resolved.

Optionally, an intersection set of the first value range, the third value range, and the fifth value range is obtained, to obtain the value range of the front wheel steering angle change rate of the vehicle, and an intersection set of the second value range, the fourth value range, and the sixth value range is obtained, to obtain the value range of the wheel torque of the vehicle.

Optionally, in a possible implementation, an intersection set of the first value range and the third value range is obtained, to obtain the value range of the front wheel steering angle change rate of the vehicle, and an intersection set of the second value range and the fourth value range is obtained, to obtain the value range of the wheel torque of the vehicle. Alternatively, an intersection set of the first value range and the fifth value range is obtained, to obtain the value range of the front wheel steering angle change rate, and an intersection set of the second value range and the sixth value range is obtained, to obtain the value range of the wheel torque of the vehicle. Alternatively, an intersection set of the third value range and the fifth value range is obtained, to obtain the value range of the front wheel steering angle change rate of the vehicle, and an intersection set of the fourth value range and the sixth value range is obtained, to obtain the value range of the wheel torque of the vehicle. Alternatively, an intersection set of the third value range, the third value range, and the fifth value range is obtained, to obtain the value range of the front wheel steering angle change rate of the vehicle, and an intersection set of the second value range, the fourth value range, and the sixth value range is obtained, to obtain the value range of the wheel torque of the vehicle.

It should be noted that, in comparison with determining the value range of the front wheel steering angle change rate of the vehicle and the value range of the wheel torque of the vehicle based on one or two of the status information at the start point and the status information at the end point, the first constraint condition, or the second constraint condition, determining the value range of the vehicle control information based on the status information (including the status information of the vehicle at the start point and the status information of the vehicle at the end point) of the vehicle, the first constraint condition, and the second constraint condition can ensure that a value range of a vehicle control value can better comply with a motion rule of the vehicle, that is, within a traveling capability range of the vehicle, to better resolve a problem that a planned path is inappropriate.

In addition, a vehicle motion may be controlled based on the front wheel steering angle change rate of the vehicle and the wheel torque of the vehicle. Therefore, in this invention, the two items are determined as vehicle control information. Certainly, the user may determine another control item that can control the vehicle motion as the vehicle control information.

S1102: Determine a value of the front wheel steering angle change rate of the vehicle based on the value range of the front wheel steering angle change rate of the vehicle and a lateral motion target function of the vehicle.

The lateral motion target function of the vehicle is a function about the front wheel steering angle change rate, and represents a deviation between a lateral motion of the vehicle and an ideal lateral motion of the vehicle.

Optionally, the lateral motion target function of the vehicle is $J_1(x, u_1) = J_{mov}(x, u_1) + J_{obst}(x)$. $J_1(x, u)$ represents the deviation between the lateral motion of the vehicle and the ideal lateral motion of the vehicle. $J_{mov}(x, u_1)$ represents a deviation between a heading angle of the vehicle and a heading angle of the road edge of the road on which the vehicle is located, and a deviation between a curvature of a vehicle track and a curvature of the road edge of the road on which the vehicle is located during the lateral motion of the vehicle. $J_{obst}(x)$ is a function of a distance between the vehicle and an obstacle and represents a deviation between an obstacle avoidance behavior of the vehicle and an ideal obstacle avoidance behavior. A smaller distance between the vehicle and the obstacle indicates a larger value of the function. $J_{mov}(x, u_1)$ and $J_{obst}(x)$ are associated with each other by using the status information of the vehicle.

For example, the lateral motion target function of the vehicle is

$$J_{mov}(\mathrm{x}, \ \mathrm{u}_1) = \int_t^{t+T} \left\{ \frac{1}{2} \mathrm{u}_1^2(\tau) + \mathrm{k}_\theta \left( \theta(\tau) - \theta_r \right)^2 + \mathrm{k}_\kappa \left( \kappa(\tau) - \kappa_r \right)^2 \right\} d\tau$$

, where x represents the status information of the vehicle, including $\theta(\tau)$, $\kappa(\tau)$, and the like, $u_1$ represents a front wheel steering angle change rate of the vehicle, $\theta(\tau)$ is a heading angle of the vehicle, $\theta_r$ is a heading angle of the road edge of the road on which the vehicle is located, $\kappa(\tau)$ is a curvature of a vehicle track, $\kappa_r$ is a curvature of the road edge of the road on which the vehicle is located, $(\theta(\tau)) - \theta_r)$ represents a deviation between the heading angle of the vehicle and the heading angle of the road edge, $k_\theta$ is a weight of the deviation between the heading angle of the vehicle and the heading angle of the road edge, $(\kappa(\tau) - \kappa_r)$ represents a deviation between the curvature of the vehicle track and the curvature of the road edge, and $k_\kappa$ is a weight of the deviation between the curvature of the vehicle track and the curvature of the road edge. Usually, a greater weight of each item of the lateral motion target function of the vehicle indicates a higher importance of the item. $k_\theta$ and $k_\kappa$ are far greater than the weight 1/2 of the front wheel steering angle change rate, and $k_\theta$ and $k_\kappa$ may be set to functions about the longitudinal speed $V_x$ of the vehicle. A larger longitudinal speed of the vehicle indicates larger values of the two weights: $k_\theta$ and $k_\kappa$. In addition, a lateral speed of the vehicle is obtained by multiplying the longitudinal speed of the vehicle by the centroid side slip angle.

However, the lateral speed is usually very small, and has little impact on the vehicle motion. Therefore, the lateral speed of the vehicle is not considered herein. Certainly, a user may alternatively consider the lateral speed of the vehicle based on an actual requirement, to determine the deviation between the lateral motion of the vehicle and the ideal lateral motion.

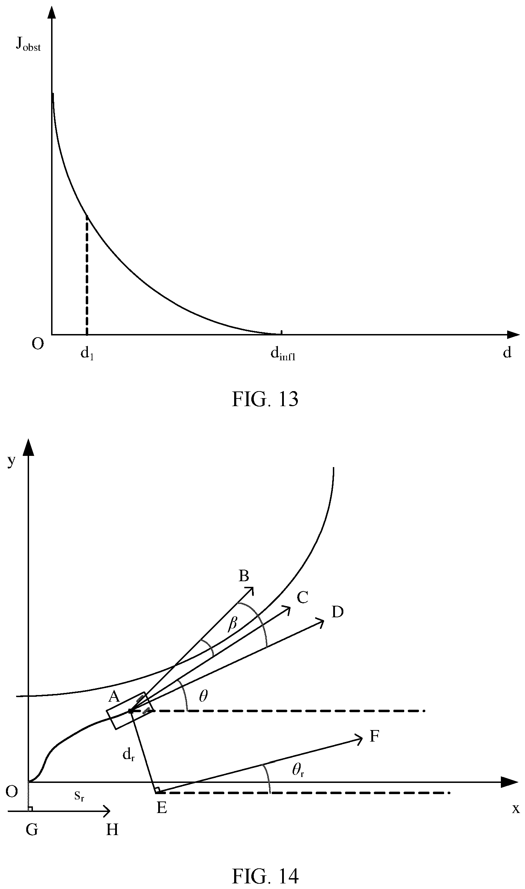

For example, $J_{obst}(x)=k_{obst}[\min((d-d_{inf1}),0)]^2$, where x represents the status information of the vehicle, including a distance d between the vehicle and an obstacle, $d_{inf1}$ is an obstacle impact radius, $(d-d_{inf1})$ indicates a difference between the obstacle impact radius and the distance between the vehicle and the obstacle, and $k_{obst}$ indicates a weight of the difference. Usually, a value of the weight $k_{obst}$ is 10000. As shown in FIG. 13, if d is greater than or equal to $d_{inf1}$, a value of $J_{obst}(x)$ is 0; or if d is less than $d_{inf1}$, a value of $J_{obst}(x)$ is $(d-d_{inf1})^2$. Optionally, a minimum value of d, that is, $d_1$, is greater than or equal to 0, and $d_1$ is a safe distance between the vehicle and the obstacle. The safe distance may be preset, or may be determined based on a current scenario.

Optionally, a smaller value of $J_1(x, u_1)$ indicates a smaller deviation between the lateral motion of the vehicle and the ideal lateral motion. Therefore, a minimum value of the lateral target function is determined based on the value range of the front wheel steering angle change rate. Then, a value that is of the front wheel steering angle change rate and that corresponds to the minimum value of the lateral motion target function is determined as a value of the front wheel steering angle change rate of the vehicle.

In a possible implementation, after step S1101, a possible value of the lateral motion target function of the vehicle may be determined in a manner such as a "multi-point shooting method", and then the value that is of the front wheel steering angle change rate and that corresponds to the minimum value of the lateral motion target function of the vehicle is determined as the value of the front wheel steering angle change rate of the vehicle.

First, for each value of the front wheel steering angle change rate of the vehicle within the value range of the front wheel steering angle change rate of the vehicle, a longitudinal speed of the vehicle, a heading angle of the vehicle, a heading angle of the road edge of the road on which the vehicle is located, a curvature of a vehicle track, a curvature of the road edge of the road on which the vehicle is located, and a distance between the vehicle and an obstacle that correspond to each value of the front wheel steering angle change rate are determined based on the vehicle-road kinematic model. Then, a value that is of the lateral motion target function and that corresponds to each value of the front wheel steering angle change rate is determined based on a difference between the heading angle of the vehicle and the heading angle of the road edge, a difference between the curvature of the vehicle track and the curvature of the road edge, the value of the front wheel steering angle change rate, and a difference between an obstacle impact radius and the distance between the vehicle and the obstacle. Finally, the minimum value of the lateral motion target function of the vehicle is determined.

In a possible implementation, if the minimum value of the lateral motion target function of the vehicle corresponds to a plurality of values of the front wheel steering angle change rate, a minimum value in the plurality of values of the front wheel steering angle change rate is determined as the value of the front wheel steering angle change rate of the vehicle.

It should be noted that the lateral motion of the vehicle makes the vehicle far away from the road edge, and the value of the vehicle control information is determined by using the minimum value of the lateral target function, so that a motion track of the vehicle can be parallel to the road edge as much as possible while the vehicle can avoid the obstacle during the lateral motion. In addition, when all other conditions of the vehicle motion are met, a smaller value of the front wheel steering angle change rate indicates a more stable motion status of the vehicle, that is, higher comfort and safety in a motion process of the vehicle.

S1103: Determine a value of the wheel torque of the vehicle based on the value range of the wheel torque of the vehicle and a longitudinal motion target function of the vehicle.

The longitudinal motion target function of the vehicle is a function about the wheel torque, and represents a deviation between a longitudinal motion of the vehicle and an ideal longitudinal motion of the vehicle.

Optionally, the longitudinal motion target function of the vehicle is $J_2(x, u_2)$, and represents the deviation between the longitudinal motion of the vehicle and the ideal longitudinal motion of the vehicle.

For example, the longitudinal motion target function of the vehicle is

$$J_2(\mathbf{x}, \ \mathbf{u}_2)=\int_t^{t+T}\frac{1}{2}\mathbf{u}_2^2(\tau)+k_v\left(V_x(\tau)-V_r\right)^2 d\tau$$

. $J_2(x, u_2)$ represents the deviation between the longitudinal motion of the vehicle and the ideal longitudinal motion, x represents the status information of the vehicle,

including the longitudinal speed $V_x(\tau)$ of the vehicle, and $u_2$ represents the wheel torque of the vehicle. $V_r$ represents a target longitudinal speed of the vehicle, $V_x(\tau)-V_r$ represents a deviation between the longitudinal speed of the vehicle and the target longitudinal speed, and $k_v$ is a weight of the deviation. $k_v$ is far greater than the weight 1/2 of the wheel torque of the vehicle. The weight $k_v$ may be set to a function about the longitudinal speed $V_x$ of the vehicle. A larger longitudinal speed of the vehicle indicates a larger value of $k_v$.

Optionally, a smaller value of $J_2(x, u_2)$ indicates a smaller deviation between the longitudinal motion of the vehicle and the ideal longitudinal motion of the vehicle if it is ensured that the longitudinal speed of the vehicle is close to the target longitudinal speed of the vehicle as much as possible when the wheel torque of the vehicle is as small as possible. In this case, the motion status of the vehicle is more stable. Therefore, a minimum value of the longitudinal motion target function of the vehicle is determined based on the value range of the wheel torque of the vehicle. Then, a value that is of the wheel torque and that corresponds to the minimum value of the longitudinal motion target function of the vehicle is determined as a value the wheel torque of the vehicle.

In a possible implementation, after step S1101, a value of the longitudinal motion target function of the vehicle may be determined in a manner such as a "multi-point shooting method", and then the value that is of the wheel torque of the vehicle and that corresponds to the minimum value of the longitudinal motion target function of the vehicle is determined as the value of the wheel torque of the vehicle.

First, for each value of the wheel torque of the vehicle within the value range of the wheel torque of the vehicle, a longitudinal speed that is of the vehicle and that corresponds to the value of the wheel torque and a target longitudinal speed is determined. Then, a value that is of the longitudinal target function of the vehicle and that corresponds to each value of the wheel torque of the vehicle is determined based on the value of the wheel torque of the vehicle and the difference between the longitudinal speed of the vehicle and the target longitudinal speed. Finally, the minimum value of the longitudinal target function of the vehicle is determined.

In a possible implementation, if the minimum value of the longitudinal motion target function of the vehicle corresponds to a plurality of wheel torques, a minimum value in the plurality of wheel torques is determined as the value of the wheel torque of the vehicle.

It should be noted that when all other conditions of the vehicle motion are met, a smaller value of the wheel torque of the vehicle indicates a more stable motion status of the vehicle, that is, higher comfort and safety in a motion process of the vehicle.

In addition, as shown in FIG. 11, step S1102 and step S1103 may be both performed after step S1101, and are not subject to a specific sequence.

S1104: Control a motion of the vehicle based on the value of the front wheel steering angle change rate of the vehicle and the value of the wheel torque of the vehicle.

After the value of the front wheel steering angle change rate of the vehicle and the value of the wheel torque of the vehicle are determined, the vehicle motion is controlled. Then, status information obtained after the vehicle moves based on the front wheel steering angle change rate and the wheel torque is obtained, and the foregoing steps S1101 to S1104 are repeatedly performed by using the status information, to re-determine a value of the front wheel steering angle change rate of the vehicle and a value of the wheel torque of the vehicle. In addition, the vehicle motion is controlled based on the re-determined value of the front wheel steering angle change rate of the vehicle and the re-determined value of the wheel torque of the vehicle. By repeating the foregoing steps, a value of the front wheel steering angle change rate of the vehicle and a value of the wheel torque of the vehicle at each moment in the vehicle motion from the initial moment to the end moment may be obtained, to control the vehicle to complete the motion from the initial moment to the end moment.

In the foregoing process, the vehicle control information, that is, the value of the front wheel steering angle change rate of the vehicle and the value of the wheel torque, is determined based on the dynamic model of the vehicle, the kinematic model of the road on which the vehicle is located, the tire friction model, and the status information of the vehicle. Therefore, the value of the front wheel steering angle change rate of the vehicle and the value of the wheel torque of the vehicle comply with kinematic and dynamic rules of the vehicle, and the motion of the vehicle can be controlled within a traveling capability range of the vehicle. This well resolves a problem that a planned path is inappropriate in the conventional technology.

The following describes in detail, by using examples and with reference to figures, the dynamic model of the vehicle, the kinematic model of the road on which the vehicle is located, the tire friction model of the vehicle, and the parameters in the foregoing models in this invention.

In a possible implementation, the parameters in the foregoing models may be better described based on a rectangular coordinate system. After the rectangular coordinate system is established, the location of the vehicle may be represented by using coordinates of the location of the vehicle in the rectangular coordinate system. The centroid side slip angle of the vehicle is an included angle between a speed direction of the centroid of the vehicle and a direction of a vehicle head. The yaw angle of the vehicle is a difference between the heading angle of the vehicle and the centroid side slip angle of the vehicle, and the heading angle of the vehicle is an included angle between the speed direction of the centroid of the vehicle and a positive direction of a horizontal axis of the rectangular coordinate system. The yaw angular velocity of the vehicle is a change rate of the yaw angle of the vehicle. The front wheel steering angle is an included angle between a direction of a front wheel of the vehicle and the direction of the vehicle head (it is considered that front wheel steering angles of two front wheels are the same). The distance between the vehicle and the road edge is a distance between the vehicle and a point on the road edge when a connection line between the vehicle and the point on the road edge is perpendicular to a tangent of the point. The heading angle of the road edge is an included angle between a point on the road edge and the positive direction of the horizontal axis of the rectangular coordinate system. The length of the road edge is a length that is of the road edge and that corresponds to a path of the vehicle from the start point to a current location of the vehicle. Based on data collected by sensors and inherent attributes of the vehicle, the road, and the tire, for example, mass of the vehicle and the road adhesion coefficient, processing such as calculation may be performed to determine the change rates in the foregoing models, and further determine the dynamic model of the vehicle, the kinematic model of the road on which the vehicle is located, and the tire friction model.

For example, as shown in FIG. 14, O is a start point of the vehicle motion, and A is a location of the vehicle at a current moment, that is, a location of the centroid of the vehicle. A rectangular coordinate system is established by using O as an origin. A pointing direction of a vector AC is a speed direction of the centroid of the vehicle, a pointing direction of a vector AB is a direction of the front wheel of the vehicle, a vector AD is a pointing direction of the vehicle head, a curve OA is a motion path of the vehicle from the start point to the current location A, and a dashed line in the figure represents a horizontal axis, that is, an x axis. In this case, $\beta$ is a centroid side slip angle of the vehicle, $\theta$ is a heading angle of the vehicle, $\varphi$, that is, $|\theta - \beta|$, is a yaw angle of the vehicle (not shown in the figure), $\delta$ is a front wheel steering angle of the vehicle, $d_r$ is a distance between the vehicle and a road edge, that is, a line segment AE, $\theta_r$ is a heading angle of the road edge, and $s_r$ is a length of the road edge, that is, a curve GE.

For example, a lateral dynamic model of the vehicle includes $\dot{X} = V_x \cos \varphi - V_y \sin \varphi$, $\dot{Y} = V_x \sin\varphi - V_y\cos\varphi$, $\dot{\beta} = (F_{yt} + F_{yr}) / m V_x - r$, $\dot{\varphi} = r$, $\dot{r} = (l_f F_{yf} - l_r F_{yr}) / I_z$, and $\dot{\delta} = u$. (X, Y) represents a location of the vehicle, $\dot{X}$ and $\dot{Y}$ represent a change rate of the location of the vehicle, $\dot{\beta}$ represents a change rate of the centroid side slip angle of the vehicle, $\dot{r}$ represents a change rate of a yaw angular velocity of the vehicle, $V_x$ represents a longitudinal speed of the vehicle, $V_y$ represents a lateral speed of the vehicle, $\varphi$ represents the yaw angle of the vehicle, $\beta$ is the centroid side slip angle of the vehicle, $F_{yf}$ represents a longitudinal force on a front wheel of the vehicle, $F_{yr}$ represents a longitudinal force on a rear wheel of the vehicle, r, that is, $\dot{\varphi}$ represents the yaw angular velocity of the vehicle, m represents mass of the vehicle, $l_f$ represents a distance from a front axle of the vehicle to the centroid, $l_r$ represents a distance from a rear axle of the vehicle to the centroid, $I_z$ represents rotational inertia of the vehicle rotating around the centroid, u, that is, $\dot{\delta}$ represents the front wheel steering angle change rate, and $\kappa_r$ represents a curvature of a road edge. The front axle of the vehicle is a connection line between circle centers of two front wheels of the vehicle, and the rear axle of the vehicle is a connection line between circle centers of two rear wheels of the vehicle.

For example, the lateral dynamic model of the vehicle may alternatively be represented as $m\dot{V}_y + V_x r = \Sigma F_y$ and $I_z\dot{r} = \Sigma M_z$, where $F_y$ represents a lateral force (which may also be referred to as a transverse force) on the vehicle, $F_x$ represents a longitudinal force on the vehicle, and $M_z$ represents a wheel torque. (·) represents calculating a first-order derivative of a parameter in "()" below, and the first-order derivative may be related to time.

For example, as shown in (a) in FIG. 15, $F_{ywr}$ represents a lateral force on the rear wheel of the vehicle, $F_{xwr}$ represents a longitudinal force on the rear wheel of the vehicle, $l_r$ represents a distance between the rear axle of the vehicle and the centroid of the vehicle, $l_f$ represents a distance between the front axle of the vehicle and the centroid of the vehicle, $F_{ywf}$ represents a lateral force on the front wheel of the vehicle, $F_{xwf}$ represents a longitudinal force on the front wheel of the vehicle, and $\varphi$ represents an angle at which the vehicle rotates around the centroid, that is, the yaw angle of the vehicle.

For example, a longitudinal dynamic model of the vehicle includes $\dot{V}_x = (F_{xf} + F_{xr} - F_{aero}) / m$, $\dot{w}_f = (T_f - r_{eff}F_{xf}) / J_{wf}$, and $\dot{w}_r = (T_r - r_{eff}F_{xr}) / J_{wr}$. $V_x$ represents a longitudinal speed of the vehicle, $F_{xr}$ represents a longitudinal force on the front wheel of the vehicle, $F_{xf}$ represents a longitudinal force on the rear wheel of the vehicle, $F_{aero}$ represents air resistance, $T_f$ represents a wheel torque of the front wheel of the vehicle, $T_r$ represents a wheel torque of the rear wheel of the vehicle, $r_{eff}$ represents a rolling radius of a wheel, $W_f$ represents an angular velocity of the front wheel of the vehicle, $w_r$ represents an angular velocity of the rear wheel of the vehicle, $J_{wf}$ represents rotational inertia of the front wheel of the vehicle, and $J_{wr}$

$$F_{aero} = \frac{1}{2}\rho C_x A_x V_x^2$$

represents rotational inertia of the rear wheel of the vehicle. , where $\rho$ represents the air density, $C_x$ represents an air lift coefficient, and $A_x$ represents a cross-sectional area of the vehicle.

For example, as shown in (b) in FIG. 15, the longitudinal dynamic model of the vehicle may also be represented as $F_x - F_{aero} = m\dot{V}_x$ and $T - F_x r_{eff} = J_w \dot{w}_w$. $J_w$ represents rotation inertia of a wheel, T represents a wheel torque, and $w_w$ represents a rotation angular velocity of the wheel.

For example, the tire friction model includes $F_x = f_x(\mu, \sigma_x, \alpha, F_z)$ and $F_y = f_y(\mu, \alpha, F_z)$. $F_x$ is a longitudinal force on a tire, $F_y$ represents a lateral force on the tire, $\mu$ is a road adhesion coefficient, $\sigma_x$ is a longitudinal slip rate, $\alpha$ is a side slip angle of the tire, and $F_z$ is a vertical load of the tire. If the vehicle is in an acceleration state, $\sigma_x = \dfrac{r_{eff} W_w - V_x}{r_{eff} W_w}$ . If the vehicle is in a

deceleration (braking) state, $\sigma_x = \dfrac{r_{eff} W_w - V_x}{V_x}$ . The longitudinal force on the tire is $F_x = \dfrac{\sigma_x}{\sigma} F$ , and the lateral force on the tire is $F_y = \dfrac{\sigma_y}{\sigma} F$ . A lateral slip rate is $\sigma_y = \dfrac{V_x}{r_{eff} w_w} \tan \alpha$ , a side slip angle of the front wheel is

$\alpha_f = \delta - \dfrac{V_x \beta + l_f r}{V_x}$ , and a side slip angle of the rear wheel is $\alpha_r = \dfrac{l_r r - V_x \beta}{V_x}$ . A total slip rate is $\sigma = \sqrt{\sigma_x^2 + \sigma_y^2}$ ,

that is, a slip rate in the case of full slip, $l_f$ represents a distance from the front axle of the vehicle to the centroid, $l_r$ represents the distance from the rear axle of the vehicle to the centroid, and k represents longitudinal rigidities of the front and rear wheels of the vehicle. If $\sigma \geq \sigma_m$, a combined force is $F = \mu F_z$. If the total slip rate is $\sigma < \sigma_m$, the combined force is

$$F = \mu F_z \left[ 3\theta\sigma - \frac{1}{3}(3\theta\sigma)^2 + \frac{1}{27}(3\theta\sigma)^3 \right]$$

. Certainly, the tire friction model is not limited to the function provided in this example, and may be represented by using another function.

It should be noted that, compared with another linear tire model, the tire friction can better reflect a non-linear feature of the tire, so that a more accurate force on the tire can be obtained based on the tire friction model.

For example, the kinematic model of the road on which the vehicle is located includes $\dot{\theta}_r = V_x \cos(\beta + \varphi - \theta_r) / (1 - d_r\kappa_r)$, $\dot{d}_r = V_x \sin(\beta + \varphi - \theta_r)$, and $\dot{s}_r = V_x \cos(\beta + \varphi - \theta_r) / (1 - d_r\kappa_r)$. $V_x$ represents a longitudinal speed of the vehicle, $\beta$ is a centroid side slip angle of the vehicle, $\varphi$ represents a yaw angle of the vehicle, $\theta_r$ is a heading angle of a road edge, $d_r$ is a distance between the vehicle and the road edge, and $\kappa_r$ represents a curvature of the road edge.

For example, the kinematic model of the road on which the vehicle is located includes $\dot{\theta}_r = u\cos(\theta_v - \theta_r) \kappa_r / (1 - d_r)\kappa_r)$, $\dot{d}_r = u\sin(\theta_v - \theta_r)$, and $\dot{s}_r = u\cos(\theta_v - \theta_r) / (1 - d_r\kappa_r)$. In the foregoing example of the functions included in the models $\theta_v$, the mass m of the vehicle, the distance $l_f$ from the front axle of the vehicle to the centroid, the distance $l_r$ from the rear axle of the vehicle to the centroid, the rotational inertia $J_{wf}$ of the front wheel of the vehicle, the rotational inertia $J_{wr}$ of the rear wheel of the vehicle, the air lift coefficient $C_x$, the cross-sectional area $A_x$ of the vehicle, the road adhesion coefficient $\mu$, and the curvature $\kappa_r$ of the road edge are directly obtained data. The status information of the vehicle is data measured by the sensor and includes the location of the vehicle, the centroid side slip angle of the vehicle, the yaw angle of the vehicle, the yaw angular velocity of the vehicle, the front wheel steering angle change rate, the distance between the vehicle and the road edge, the heading angle of the road edge, the length of the road edge, the longitudinal speed of the vehicle, the front wheel angular velocity, and the rear wheel angular velocity (that is, a drive wheel angular velocity). Other data is obtained through calculation.

For the technical solutions of this invention, the following provides a specific embodiment, namely, Embodiment 1, to more clearly reflect improvements of the technical solutions of this invention compared with the conventional technology.

Embodiment 1:

In Embodiment 1, a rectangular coordinate system is established by using O as an origin, and a road coordinate system shown in FIG. 16 may be obtained. In the road coordinate system, a curve corresponding to a road edge (that is, a right boundary of a road, and a black solid curve at the bottom in FIG. 16) may be represented by $y_r = 1/120000 x_r^3$ .
Based on the road shown in FIG. 16, if a traveling path (for example, s shown in the figure) of the vehicle and a distance (for example, $d_r$ shown in the figure) between the vehicle and the road edge are known, it may be determined that coordinates of a vehicle A in the road coordinate system are (X, Y), and a heading angle that is of the road edge and that corresponds to the location of the vehicle is $\theta_r$. In addition, as shown in FIG. 16, a lane width of the road is 4 m, a width of the road is 8 m, and the road is a unidirectional two-lane road.

Data is obtained by using an apparatus such as a sensor on the vehicle. The data includes dynamic parameters of the vehicle, as shown in Table 1 below. The dynamic parameters of the vehicle include mass of the vehicle, rotational inertia of the vehicle around a centroid, equivalent rotational inertia of front and rear wheels, a distance between a front axle of the vehicle and the centroid of the vehicle, a distance between a rear axle of the vehicle and the centroid of the vehicle, lateral rigidities of the front and rear wheels of the vehicle, longitudinal rigidities of the front and rear wheels of the vehicle, a rolling radius of a wheel, a cross-sectional area of the vehicle, an air density, an air lift coefficient, a lateral rigidity of a tire per unit area, a half of a length of a front tire mark, a half of a width of the front tire mark, a half of a length of a rear tire mark, and a half of a width of the rear tire mark.

**Table 1**

| Parameter | Value (Unit) |
|---|---|
| Mass m of the vehicle | 1650 kg |
| Rotational inertia $I_z$ of the vehicle around a centroid | 3200 kg·m$^2$ |
| Equivalent rotational inertia $J_{wf}$ and $J_{wr}$ of the front and rear wheels | 6.75 kg·m$^2$ |
| Distance $l_f$ between the front axle of the vehicle and the centroid of the vehicle | 1.4 m |
| Distance $l_r$ between the rear axle of the vehicle and the centroid of the vehicle | 1.65 m |
| Lateral rigidities $C_{\alpha f}$ and $C_{\alpha r}$ of the front and rear wheels of the vehicle | 114794 N/rad |
| Longitudinal rigidities $K_{sf}$ and $K_{sr}$ of the front and rear wheels of the vehicle | 100711 N/rad |
| Rolling radius $r_{eff}$ of a wheel | 0.26 m |
| Cross-sectional area $A_d$ of the vehicle | 2.2 m$^2$ |
| Air density $\rho$ | 1.2306 kg/m$^3$ |
| Air lift coefficient $C_x$ | 0.3 [-] |
| Lateral rigidity k of a tire per unit area | 371250 N/m$^3$ |
| Half $a_f$ of the length of the front tire mark | 0.121 m |
| Half $b_f$ of the width of the front tire mark | 0.0814 m |
| Half $a_r$ of the length of the rear tire mark | 0.1129 m |
| Half $b_r$ of the width of the rear tire mark | 0.0805 m |

The parameters in the foregoing table are input into a dynamic model of the vehicle, a kinematic model of the road on which the vehicle is located, and a tire friction model, to determine a vehicle-road kinematic model. Status information of the vehicle at an initial moment is determined based on data obtained by the sensor or the like. For example, the status information of the vehicle at the initial moment includes a traveled path s=0 of the vehicle, a distance $d_{r,ini}$=2 m between the vehicle and the road edge, location coordinates $(X_{ini}, Y_{ini})$ of the vehicle at the initial moment, a vehicle heading angle $\theta_{r, ini}$=0 corresponding to the location, a length $s_{r,ini}$=0 of the road edge, a centroid side slip angle $\beta_{ini}$=0 of the vehicle, a yaw angle $\varphi_{ini}$=0, a yaw angular acceleration $r_{ini}$=0, and a front wheel steering angle $\delta_{ini}$=0.

In addition, based on the status information of the vehicle at the initial moment and obstacle information in the data obtained by the sensor, it may be determined that a motion status of the vehicle is deceleration, acceleration, lane changing, or the like. For example, in Embodiment 1, an obstacle is a stationary vehicle, and the vehicle needs to avoid the stationary vehicle at a uniform speed (which is a longitudinal speed of the vehicle) within 3s, and change a lane to a center position of a left lane. Therefore, status information of the vehicle at an end moment may be determined. For example, the status information of the vehicle at the end moment includes a length $s_{r, targ}$=60 m of a road edge, a distance $d_{r, targ}$=6 m between the vehicle and the road edge, location coordinates $(X_{targ}, Y_{targ})$ of the vehicle, and a heading angle $\theta_{r, targ}$ of the road edge. After the vehicle arrives at a target location, the wheels need to be aligned. Therefore, a front wheel steering angle is $\delta_{targ}$=0. The vehicle travels along a center line of the left lane, a yaw angle of the vehicle is $\varphi_{targ} = \theta_{r,targ}$, a centroid side slip angle of the vehicle is $\beta_{targ}$=0, and a yaw angular velocity is $r_{targ}$=0.

A first constraint condition, that is, a value range of a distance between the vehicle and the road edge, may be determined based on $d_{min} \le d_r \le d_{max}$ ($d_{min}$=d/2, if $\Delta s > s_{safe}$; $d_{min}$=$d_{obst}$ +d, if $\Delta s \le s_{safe}$) and a distance between the vehicle and the obstacle, a vehicle width d=1.98 m, and the road width 8 m. A preset safe distance between the vehicle and the obstacle is $s_{safe}$=1 m, a distance between the obstacle and the road edge is $d_{obst}$=2 m, and the distance between the vehicle and the obstacle is $\Delta s$ . If $\Delta s$ >1 m, the value range of the distance between the vehicle and the road edge is 0.94 m<=$d_r$<=7.06 m. If $\Delta s$ <=1 m, the value range of the distance between the vehicle and the road edge is 3.98 m<=$d_r$<=7.06

$$k_\kappa = 1000 * V_x^2, \quad k_\theta = 1000 * V_x^3$$

m. , $k_{obst}$=10000, and $d_{inf1}$=6m in a lateral motion target function of the vehicle, and $k_v$= 100 and $V_r$=20m/s in a longitudinal motion target function of the vehicle are determined mainly based on the status information of the vehicle at the initial moment and a longitudinal speed of the vehicle.

To ensure stability of the motion status of the vehicle, a second constraint condition is determined. The second constraint condition includes a maximum longitudinal speed of the vehicle, a maximum front wheel steering angle of the vehicle, a maximum front wheel steering angle change rate of the vehicle, a maximum yaw angle of the vehicle, a maximum yaw angular acceleration of the vehicle, and the like.

In a matlab environment, non-linear solving is performed based on the first constraint condition, the second constraint condition, the status information of the vehicle at a start point, and the status information of the vehicle at the end point with reference to the vehicle-road kinematic model and the fmincon function, to obtain a minimum value of the lateral motion target function of the vehicle and a minimum value of the longitudinal motion target function of the vehicle, so as to determine a value of the front wheel steering angle change rate of the vehicle and a value of the wheel torque of the vehicle that correspond to the minimum values. Finally, a motion of the vehicle is controlled based on the value of the front wheel steering angle change rate of the vehicle and the value of the wheel torque of the vehicle, to obtain a motion track of the vehicle, as shown in FIG. 17.

In a same application scenario, traveling paths of the vehicle determined by using a path planning method based on an artificial potential field method and a path planning method based on a rapidly random-exploring tree in the conventional technology are respectively shown in FIG. 18 and FIG. 19. Compared with the traveling paths of the vehicle shown in FIG. 18 and FIG. 19, the traveling path of the vehicle shown in FIG. 17 is more stable, has less fluctuation, and has a more natural path shape.

In embodiments of this invention, a vehicle control apparatus may be divided into function modules based on the foregoing method example. When each functional module is obtained through division based on each corresponding function, FIG. 20 is a possible schematic diagram of a structure of vehicle control in the foregoing embodiment. As shown in FIG. 20, the vehicle control apparatus includes a determining unit 2001 and a control unit 2002. Certainly, the vehicle control apparatus may further include another module, or the vehicle control apparatus may include fewer modules.

The determining unit 2001 is configured to determine a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle.

The dynamic model of the vehicle represents a change rule of a motion status of the vehicle, the kinematic model of the road on which the vehicle is located represents a change rule of a location of the vehicle relative to a road edge, and the tire friction model of the vehicle represents a change rule of a tire friction force of the vehicle.

Optionally, the status information of the vehicle includes status information of the vehicle at a start point and status information of the vehicle at an end point. The start point is a location of the vehicle at an initial moment, and the end point is a location of the vehicle after a motion ends.

In a possible implementation, the determining unit 2001 is configured to establish a vehicle-road dynamic model based on the tire friction model of the vehicle, the vehicle dynamic model, and the kinematic model of the road on which the vehicle is located. The vehicle-road dynamic model represents an association relationship between the dynamic model of the vehicle and the kinematic model of the road on which the vehicle is located. The determining unit 2001 is configured to determine a first value range of the front wheel steering angle change rate of the vehicle and a second value range of the wheel torque of the vehicle based on the status information of the vehicle at the start point, the status information of the vehicle at the end point, and the vehicle-road dynamic model. The determining unit 2001 is configured to determine the first value range as the value range of the front wheel steering angle change rate of the vehicle, and determine the second value range as the value range of the wheel torque of the vehicle.

Optionally, the status information of the vehicle includes a distance between the vehicle and an obstacle, a preset safe distance, a distance between the obstacle and the road edge, a width of the vehicle, and a width of the road on which the vehicle is located. The preset safe distance is a preset distance between the vehicle and an obstacle.

In a possible implementation, the determining unit 2001 is configured to establish a vehicle-road dynamic model based on the tire friction model of the vehicle, the vehicle dynamic model, and the kinematic model of the road on which the vehicle is located. The vehicle-road dynamic model represents an association relationship between the dynamic model of the vehicle and the kinematic model of the road. The determining unit 2001 is configured to determine a third value range of the front wheel steering angle change rate of the vehicle and a fourth value range of the wheel torque of the vehicle based on a first constraint condition and the vehicle-road dynamic model. The first constraint condition is a value range of a distance between the road edge and the vehicle, and the first constraint condition is obtained based on the status information of the vehicle. The determining unit 1801 is configured to determine the third value range as the value range of the front wheel steering angle change rate of the vehicle, and determine the fourth value range as the value range of the wheel torque of the vehicle.

In a possible implementation, the determining unit 2001 is further configured to: if the distance between the vehicle and the obstacle is less than or equal to the preset safe distance, determine the first constraint condition based on the distance between the obstacle and the road edge of the road on which the vehicle is located, the width of the vehicle, and the width of the road. The determining unit 2001 is alternatively configured to: if the distance between the vehicle and the obstacle is greater than the preset safe distance, determine the first constraint condition based on the width of the vehicle and the width of the road on which the vehicle is located.

Optionally, the status information of the vehicle includes a maximum longitudinal speed of the vehicle, a maximum front wheel steering angle of the vehicle, a maximum front wheel steering angle change rate of the vehicle, a maximum yaw angle of the vehicle, and a maximum yaw angular acceleration of the vehicle.

In a possible implementation, the determining unit 2001 is configured to establish a vehicle-road dynamic model based on the tire friction model of the vehicle, the vehicle dynamic model, and the kinematic model of the road on which the vehicle is located. The vehicle-road dynamic model represents an association relationship between the dynamic model of the vehicle and the kinematic model of the road on which the vehicle is located. The determining unit 2001 is configured to determine a fifth value range of the front wheel steering angle change rate of the vehicle and a sixth value range of the wheel torque of the vehicle based on a second constraint condition and the vehicle-road dynamic model. The second constraint condition includes the maximum longitudinal speed of the vehicle, the maximum front wheel steering angle of the vehicle, and the maximum front wheel steering angle change rate of the vehicle, and the second constraint condition is obtained based on the status information of the vehicle. The determining unit 2001 is configured to determine the fifth value range as the value range of the front wheel steering angle change rate of the vehicle, and determine the sixth value range as the value range of the wheel torque of the vehicle.

In a possible implementation, the second constraint condition further includes the maximum yaw angle of the vehicle and/or the maximum yaw angular acceleration of the vehicle.

In a possible implementation, the determining unit 2001 is configured to obtain an intersection set of at least two of the first value range, the third value range, and the fifth value range, to obtain the value range of the front wheel steering angle change rate of the vehicle. The determining unit 2001 is configured to obtain an intersection set of at least two of the second value range, the fourth value range, and the sixth value range, to obtain the value range of the wheel torque of the vehicle.

The determining unit 2001 is further configured to determine a value of the front wheel steering angle change rate of the vehicle based on the value range of the front wheel steering angle change rate of the vehicle and a lateral motion target function of the vehicle. The lateral motion target function of the vehicle is a function about the front wheel steering angle change rate of the vehicle, and the lateral motion target function of the vehicle represents a deviation between a lateral motion of the vehicle and an ideal lateral motion of the vehicle.

Optionally, the determining unit 2001 is further configured to determine a minimum value of the lateral motion target function of the vehicle based on the value range of the front wheel steering angle change rate of the vehicle. The determining unit 2001 is further configured to determine a value that is of the front wheel steering angle change rate and that corresponds to the minimum value of the lateral motion target function of the vehicle as a value of the front wheel steering angle change rate of the vehicle.

In a possible implementation, the determining unit 2001 is further configured to determine, for each value of the front wheel steering angle change rate of the vehicle within the value range of the front wheel steering angle change rate of the vehicle, a longitudinal speed of the vehicle, a heading angle of the vehicle, a heading angle of the road edge, a curvature of a vehicle track, a curvature of the road edge, and a distance between the vehicle and an obstacle that correspond to a value of the front wheel steering angle change rate of the vehicle. Then, the determining unit 2001 is further configured to determine, based on a difference between the heading angle of the vehicle and the heading angle of the road edge of the road on which the vehicle is located, a difference between the curvature of the vehicle track and the curvature of the road edge of the road on which the vehicle is located, the value of the front wheel steering angle change rate of the vehicle, and a difference between an obstacle impact radius and the distance between the vehicle and the obstacle, a value that is of the lateral motion target function of the vehicle and that corresponds to each value of the front wheel steering angle change rate of the vehicle. The determining unit 2001 is further configured to determine the minimum value of the lateral motion target function of the vehicle.

The determining unit 2001 is further configured to determine a value of the wheel torque of the vehicle based on the value range of the wheel torque of the vehicle and a longitudinal motion target function of the vehicle. The longitudinal motion target function of the vehicle is a function about the wheel torque of the vehicle, and the longitudinal motion target function of the vehicle represents a deviation between a longitudinal motion of the vehicle and an ideal longitudinal motion of the vehicle.

Optionally, the determining unit 2001 is further configured to determine a minimum value of the longitudinal motion target function of the vehicle based on the value range of the wheel torque of the vehicle. The determining unit 2001 is further configured to determine a value that is of the wheel torque and that corresponds to the minimum value of the longitudinal motion target function of the vehicle as a value of the wheel torque of the vehicle.

In a possible implementation, the determining unit 2001 is further configured to determine, for each value of the wheel torque within the value range of the wheel torque of the vehicle, a longitudinal speed that is of the vehicle and that corresponds to a value of the wheel torque of the vehicle and a target longitudinal speed. The determining unit 2001 is further configured to determine, based on the value of the wheel torque of the vehicle and the difference between the longitudinal speed of the vehicle and the target longitudinal speed, a value that is of the longitudinal motion target function and that corresponds to each value of the wheel torque of the vehicle. The determining unit 2001 is further configured to determine the minimum value of the longitudinal target function of the vehicle.

The control unit 2002 is configured to control a motion of the vehicle based on the value of the front wheel steering angle change rate of the vehicle and the value of the wheel torque of the vehicle.

Refer to FIG. 21. This invention application further provides a vehicle control apparatus. The apparatus includes a memory 2101, a processor 2102, a communications interface 2103, and a bus 2104. The processor 2102 is configured to control and manage actions of the apparatus, and/or configured to perform another process of the technology described in this specification. The communications interface 2103 is configured to support communication between the apparatus and another network entity. The memory 2101 is configured to store program code and data of the apparatus.

The processor 2102 (or described as a controller) may implement or execute various example logical blocks, unit modules, and circuits described with reference to content disclosed in this invention. The processor or the controller may be a central processing unit, a general purpose processor, a digital signal processor, an application-specific integrated circuit, a field programmable gate array or another programmable logic device, a transistor logic device, a hardware component, or any combination thereof. The processor or the controller may implement or execute various example logical blocks, unit modules, and circuits described with reference to content disclosed in this invention. The processor 2102 may alternatively be a combination of processors implementing a computing function, for example, a combination of one or more microprocessors, or a combination of the DSP and a microprocessor.

The communications interface 2103 may be a transceiver circuit.

The memory 2101 may include a volatile memory, for example, a random access memory. The memory may alternatively include a non-volatile memory, for example, a read-only memory, a flash memory, a hard disk, or a solid-state drive. The memory may alternatively include a combination of the foregoing types of memories.

The bus 2104 may be an extended industry standard architecture (extended industry standard architecture, EISA) bus or the like. The bus 2104 may be classified into an address bus, a data bus, a control bus, and the like. For ease of representation, only one thick line is used to represent the bus in FIG. 21, but this does not mean that there is only one bus or only one type of bus.

For a detailed working process of the foregoing server and apparatus, refer to a corresponding process in the following method embodiments. Details are not described herein again.

Embodiments of this invention provide a computer-readable storage medium storing one or more programs. The one or more programs include instructions, and when the instructions are executed by a computer, the computer is enabled to perform the vehicle control method according to steps S1101 to S1104 in the foregoing embodiment.

Embodiments of this invention further provide a computer program product including instructions. When the instructions are run on a computer, the computer is enabled to perform the method performed by the vehicle control apparatus in steps S1101 to S1104 in the foregoing embodiment.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

All or some of the foregoing embodiments may be implemented by using software, hardware, firmware, or any combination thereof. When implemented by using a software program, the foregoing embodiments may appear in a form of a computer program product as a whole or in part, where the computer program product includes one or more computer instructions. When the computer program instructions are loaded and executed on a computer, all or some of the procedures or functions according to embodiments of this invention are generated.

The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this invention, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. In an application process, some or all of the units may be selected based on actual requirements to achieve the objectives of the solutions of embodiments.

In addition, function units in embodiments of this invention may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this invention essentially, or the part contributing to the conventional technology, some of the technical solutions may be implemented in the form of a software product. The computer software product is stored in a storage medium and includes several instructions for instructing a device (which may be a personal computer, a server, a network device, a single-chip microcomputer, or a chip) or a processor (processor) to perform all or some of the steps of the methods described in embodiments of this invention. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A vehicle control method, wherein the method comprises:

    determining (S1101) a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle, wherein the dynamic model of the vehicle represents a change rule of a motion status of the vehicle, the kinematic model of the road on which the vehicle is located represents a change rule of a location of the vehicle relative to a road edge of the road on which the vehicle is located, and the tire friction model of the vehicle represents a change rule of a tire friction force of the vehicle;
    determining (S1102) a value of the front wheel steering angle change rate of the vehicle based on the value range of the front wheel steering angle change rate of the vehicle and a lateral motion target function of the vehicle, wherein the lateral motion target function of the vehicle is a function about the front wheel steering angle change rate of the vehicle, and the lateral motion target function of the vehicle represents a deviation between a lateral motion of the vehicle and an ideal lateral motion;
    determining (S1103) a value of the wheel torque of the vehicle based on the value range of the wheel torque of the vehicle and a longitudinal motion target function of the vehicle, wherein the longitudinal motion target function of the vehicle is a function about the wheel torque of the vehicle, and the longitudinal motion target function of the vehicle represents a deviation between a longitudinal motion of the vehicle and an ideal longitudinal motion; and
    controlling (S1104) a motion of the vehicle based on the value of the front wheel steering angle change rate of the vehicle and the value of the wheel torque of the vehicle.

2. The vehicle control method according to claim 1, wherein the status information of the vehicle comprises status information of the vehicle at a start point and status information of the vehicle at an end point, the start point is a location of the vehicle at an initial moment, and the end point is a location of the vehicle after the motion ends; and
the determining a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle comprises:

    establishing a vehicle-road dynamic model based on the tire friction model of the vehicle, the dynamic model of the vehicle, and the kinematic model of the road on which the vehicle is located, wherein the vehicle-road dynamic model represents an association relationship between the dynamic model of the vehicle and the kinematic model of the road on which the vehicle is located;
    determining a first value range of the front wheel steering angle change rate of the vehicle and a second value range of the wheel torque of the vehicle based on the status information of the vehicle at the start point, the status information of the vehicle at the end point, and the vehicle-road dynamic model;

determining the first value range as the value range of the front wheel steering angle change rate of the vehicle; and

determining the second value range as the value range of the wheel torque of the vehicle.

3. The vehicle control method according to claim 1 or 2, wherein the status information of the vehicle comprises a distance between the vehicle and an obstacle, a preset safe distance, a distance between the obstacle and the road edge, a width of the vehicle, and a width of the road on which the vehicle is located, and the preset safe distance is a preset distance between the vehicle and an obstacle; and

the determining a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle comprises:

establishing a vehicle-road dynamic model based on the tire friction model of the vehicle, the dynamic model of the vehicle, and the kinematic model of the road on which the vehicle is located, wherein the vehicle-road dynamic model represents an association relationship between the dynamic model of the vehicle and the kinematic model of the road on which the vehicle is located;

determining a third value range of the front wheel steering angle change rate of the vehicle and a fourth value range of the wheel torque of the vehicle based on a first constraint condition and the vehicle-road dynamic model, wherein the first constraint condition is a value range of a distance between the road edge and the vehicle, and the first constraint condition is obtained based on the status information of the vehicle;

determining the third value range as the value range of the front wheel steering angle change rate of the vehicle; and

determining the fourth value range as the value range of the wheel torque of the vehicle.

4. The vehicle control method according to any one of claims 1 to 3, wherein the status information of the vehicle comprises a maximum longitudinal speed of the vehicle, a maximum front wheel steering angle of the vehicle, a maximum front wheel steering angle change rate of the vehicle, a maximum yaw angle of the vehicle, and a maximum yaw angular acceleration of the vehicle; and

the determining a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle comprises:

establishing a vehicle-road dynamic model based on the tire friction model of the vehicle, the dynamic model of the vehicle, and the kinematic model of the road on which the vehicle is located, wherein the vehicle-road dynamic model represents an association relationship between the dynamic model of the vehicle and the kinematic model of the road on which the vehicle is located;

determining a fifth value range of the front wheel steering angle change rate of the vehicle and a sixth value range of the wheel torque of the vehicle based on a second constraint condition and the vehicle-road dynamic model, wherein the second constraint condition comprises the maximum longitudinal speed of the vehicle, the maximum front wheel steering angle of the vehicle, and the maximum front wheel steering angle change rate of the vehicle, and the second constraint condition is obtained based on the status information of the vehicle;

determining the fifth value range as the value range of the front wheel steering angle change rate of the vehicle; and

determining the sixth value range as the value range of the wheel torque of the vehicle.

5. The vehicle control method according to claim 4, wherein the second constraint condition further comprises the maximum yaw angle of the vehicle and/or the maximum yaw angular acceleration of the vehicle.

6. The vehicle control method according to any one of claims 2 to 5, wherein the determining a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle further comprises:

obtaining an intersection set of at least two of the first value range, a third value range, and a fifth value range of the front wheel steering angle change rate of the vehicle, to obtain the value range of the front wheel steering angle change rate of the vehicle; and

obtaining an intersection set of at least two of the second value range, a fourth value range, and a sixth value range of the wheel torque of the vehicle, to obtain the value range of the wheel torque of the vehicle.

7. The vehicle control method according to claim 3, wherein the method further comprises:

if the distance between the vehicle and the obstacle is less than or equal to the preset safe distance, determining the first constraint condition based on the distance between the obstacle and the road edge, the width of the vehicle, and the width of the road on which the vehicle is located; or
if the distance between the vehicle and the obstacle is greater than the preset safe distance, determining the first constraint condition based on the width of the vehicle and the width of the road on which the vehicle is located.

8. The vehicle control method according to any one of claims 1 to 7, wherein the determining a value of the front wheel steering angle change rate of the vehicle based on the value range of the front wheel steering angle change rate of the vehicle and a lateral motion target function of the vehicle comprises:

determining a minimum value of the lateral motion target function of the vehicle based on the value range of the front wheel steering angle change rate of the vehicle; and
determining a value that is of the front wheel steering angle change rate and that corresponds to the minimum value of the lateral motion target function of the vehicle as the front wheel steering angle change rate of the vehicle.

9. The vehicle control method according to any one of claims 1 to 8, wherein the determining a value of the wheel torque of the vehicle based on the value range of the wheel torque of the vehicle and a longitudinal motion target function of the vehicle comprises:

determining a minimum value of the longitudinal motion target function of the vehicle based on the value range of the wheel torque of the vehicle; and
determining a value that is of the wheel torque and that corresponds to the minimum value of the longitudinal motion target function of the vehicle as the wheel torque of the vehicle.

10. The vehicle control method according to claim 8, wherein the determining a minimum value of the lateral motion target function of the vehicle based on the value range of the front wheel steering angle change rate of the vehicle comprises:

determining, for each value of the front wheel steering angle change rate of the vehicle within the value range of the front wheel steering angle change rate of the vehicle, a longitudinal speed of the vehicle, a heading angle of the vehicle, a heading angle of the road edge, a curvature of a vehicle track, a curvature of the road edge, and a distance between the vehicle and an obstacle that correspond to each value of the front wheel steering angle change rate of the vehicle;
determining, based on a difference between the heading angle of the vehicle and the heading angle of the road edge, a difference between the curvature of the vehicle track and the curvature of the road edge, the value of the front wheel steering angle change rate, and a difference between an obstacle impact radius and the distance between the vehicle and the obstacle, a value that is of the lateral motion target function of the vehicle and that corresponds to each value of the front wheel steering angle change rate of the vehicle; and
determining the minimum value of the lateral motion target function of the vehicle.

11. The vehicle control method according to claim 9, wherein the determining a minimum value of the longitudinal motion target function of the vehicle based on the value range of the wheel torque of the vehicle comprises:

determining, for each value of the wheel torque of the vehicle within the value range of the wheel torque of the vehicle, a longitudinal speed that is of the vehicle and that corresponds to each value of the wheel torque of the vehicle and a target longitudinal speed;
determining, based on the value of the wheel torque of the vehicle and a difference between the longitudinal speed of the vehicle and the target longitudinal speed, a value that is of the longitudinal target function of the vehicle and that corresponds to each value of the wheel torque of the vehicle; and
determining the minimum value of the longitudinal target function of the vehicle.

12. A vehicle control apparatus, configured to perform the method of any one of claims 1 to 11.

13. A computer-readable storage medium, comprising a program and instructions, wherein when the program is run or the instructions are run on a computer, the vehicle control method according to any one of claims 1 to 11 is implemented.

14. A computer program product comprising instructions, wherein when the computer program product is run on a computer, the computer is enabled to perform the vehicle control method according to any one of claims 1 to 11.

**Patentansprüche**

1. Fahrzeugsteuerungsverfahren, wobei das Verfahren umfasst:

   Bestimmen (S1101) eines Wertebereichs einer Vorderrad-Lenkwinkeländerungsrate eines Fahrzeugs und eines Wertebereichs eines Raddrehmoments des Fahrzeugs basierend auf einem dynamischen Modell des Fahrzeugs, einem kinematischen Modell einer Straße, auf der sich das Fahrzeug befindet, einem Reifenreibungsmodell des Fahrzeugs und Statusinformationen des Fahrzeugs, wobei das dynamische Modell des Fahrzeugs eine Änderungsregel eines Bewegungsstatus des Fahrzeugs repräsentiert, das kinematische Modell der Straße, auf der sich das Fahrzeug befindet, eine Änderungsregel eines Orts des Fahrzeugs relativ zu einem Straßenrand der Straße, auf der sich das Fahrzeug befindet, repräsentiert und das Reifenreibungsmodell des Fahrzeugs eine Änderungsregel einer Reifenreibungskraft des Fahrzeugs repräsentiert;
   Bestimmen (S1102) eines Werts der Vorderrad-Lenkwinkeländerungsrate des Fahrzeugs basierend auf dem Wertebereich der Vorderrad-Lenkwinkeländerungsrate des Fahrzeugs und einer Seitenbewegung-Zielfunktion des Fahrzeugs, wobei die Seitenbewegung-Zielfunktion des Fahrzeugs eine Funktion über die Vorderrad-Lenkwinkeländerungsrate des Fahrzeugs ist und die Seitenbewegung-Zielfunktion des Fahrzeugs eine Abweichung zwischen einer Seitenbewegung des Fahrzeugs und einer idealen Seitenbewegung repräsentiert;
   Bestimmen (S1103) eines Werts des Raddrehmoments des Fahrzeugs basierend auf dem Wertebereich des Raddrehmoments des Fahrzeugs und einer Längsbewegung-Zielfunktion des Fahrzeugs, wobei die Längsbewegung-Zielfunktion des Fahrzeugs eine Funktion über das Raddrehmoment des Fahrzeugs ist und die Längsbewegung-Zielfunktion des Fahrzeugs eine Abweichung zwischen einer Längsbewegung des Fahrzeugs und einer idealen Längsbewegung repräsentiert; und
   Steuern (S1104) einer Bewegung des Fahrzeugs basierend auf dem Wert der Vorderrad-Lenkwinkeländerungsrate des Fahrzeugs und dem Wert des Raddrehmoments des Fahrzeugs.

2. Fahrzeugsteuerungsverfahren nach Anspruch 1, wobei die Statusinformationen des Fahrzeugs Statusinformationen des Fahrzeugs an einem Anfangspunkt und Statusinformationen des Fahrzeugs an einem Endpunkt umfassen, der Anfangspunkt ein Ort des Fahrzeugs an einem anfänglichen Zeitpunkt ist und der Endpunkt ein Ort des Fahrzeugs, nachdem die Bewegung endet, ist; und
   das Bestimmen eines Wertebereichs einer Vorderrad-Lenkwinkeländerungsrate eines Fahrzeugs und eines Wertebereichs eines Raddrehmoments des Fahrzeugs basierend auf einem dynamischen Modell des Fahrzeugs, einem kinematischen Modell einer Straße, auf der sich das Fahrzeug befindet, einem Reifenreibungsmodell des Fahrzeugs und Statusinformationen des Fahrzeugs umfasst:

   Erstellen eines dynamischen Fahrzeug-Straße-Modells basierend auf dem Reifenreibungsmodell des Fahrzeugs, dem dynamischen Modell des Fahrzeugs und dem kinematischen Modell der Straße, auf der sich das Fahrzeug befindet, wobei das dynamische Fahrzeug-Straße-Modell eine Assoziationsbeziehung zwischen dem dynamischen Modell des Fahrzeugs und dem kinematischen Modell der Straße, auf der sich das Fahrzeug befindet, repräsentiert;
   Bestimmen eines ersten Wertebereichs der Vorderrad-Lenkwinkeländerungsrate des Fahrzeugs und eines zweiten Wertebereichs des Raddrehmoments des Fahrzeugs basierend auf den Statusinformationen des Fahrzeugs an dem Anfangspunkt, den Statusinformationen des Fahrzeugs an dem Endpunkt und dem dynamischen Fahrzeug-Straße-Modell;
   Bestimmen des ersten Wertebereichs als den Wertebereich der Vorderrad-Lenkwinkeländerungsrate des Fahrzeugs; und
   Bestimmen des zweiten Wertebereichs als den Wertebereich des Raddrehmoments des Fahrzeugs.

3. Fahrzeugsteuerungsverfahren nach Anspruch 1 oder 2, wobei die Statusinformationen des Fahrzeugs eine Distanz zwischen dem Fahrzeug und einem Hindernis, eine im Voraus eingestellte Sicherheitsdistanz, eine Distanz zwischen dem Hindernis und dem Straßenrand, eine Breite des Fahrzeugs und eine Breite der Straße, auf der sich das Fahrzeug befindet, umfassen und die im Voraus eingestellte Sicherheitsdistanz eine im Voraus eingestellte Distanz zwischen dem Fahrzeug und einem Hindernis ist; und

das Bestimmen eines Wertebereichs einer Vorderrad-Lenkwinkeländerungsrate eines Fahrzeugs und eines Wertebereichs eines Raddrehmoments des Fahrzeugs basierend auf einem dynamischen Modell des Fahrzeugs, einem kinematischen Modell einer Straße, auf der sich das Fahrzeug befindet, einem Reifenreibungsmodell des Fahrzeugs und Statusinformationen des Fahrzeugs umfasst:

Erstellen eines dynamischen Fahrzeug-Straße-Modells basierend auf dem Reifenreibungsmodell des Fahrzeugs, dem dynamischen Modell des Fahrzeugs und dem kinematischen Modell der Straße, auf der sich das Fahrzeug befindet, wobei das dynamische Fahrzeug-Straße-Modell eine Assoziationsbeziehung zwischen dem dynamischen Modell des Fahrzeugs und dem kinematischen Modell der Straße, auf der sich das Fahrzeug befindet, repräsentiert;
Bestimmen eines dritten Wertebereichs der Vorderrad-Lenkwinkeländerungsrate des Fahrzeugs und eines vierten Wertebereichs des Raddrehmoments des Fahrzeugs basierend auf einer ersten Beschränkungsbedingung und dem dynamischen Fahrzeug-Straße-Modell, wobei die erste Beschränkungsbedingung ein Wertebereich einer Distanz zwischen dem Straßenrand und dem Fahrzeug ist und die erste Beschränkungsbedingung basierend auf den Statusinformationen des Fahrzeugs erlangt wird;
Bestimmen des dritten Wertebereichs als den Wertebereich der Vorderrad-Lenkwinkeländerungsrate des Fahrzeugs; und
Bestimmen des vierten Wertebereichs als den Wertebereich des Raddrehmoments des Fahrzeugs.

4. Fahrzeugsteuerungsverfahren nach einem der Ansprüche 1 bis 3, wobei die Statusinformationen des Fahrzeugs eine maximale Längsgeschwindigkeit des Fahrzeugs, einen maximalen Vorderrad-Lenkwinkel des Fahrzeugs, eine maximale Vorderrad-Lenkwinkeländerungsrate des Fahrzeugs, einen maximalen Gierwinkel des Fahrzeugs und eine maximale Gierwinkelbeschleunigung des Fahrzeugs umfassen; und
das Bestimmen eines Wertebereichs einer Vorderrad-Lenkwinkeländerungsrate eines Fahrzeugs und eines Wertebereichs eines Raddrehmoments des Fahrzeugs basierend auf einem dynamischen Modell des Fahrzeugs, einem kinematischen Modell einer Straße, auf der sich das Fahrzeug befindet, einem Reifenreibungsmodell des Fahrzeugs und Statusinformationen des Fahrzeugs umfasst:

Erstellen eines dynamischen Fahrzeug-Straße-Modells basierend auf dem Reifenreibungsmodell des Fahrzeugs, dem dynamischen Modell des Fahrzeugs und dem kinematischen Modell der Straße, auf der sich das Fahrzeug befindet, wobei das dynamische Fahrzeug-Straße-Modell eine Assoziationsbeziehung zwischen dem dynamischen Modell des Fahrzeugs und dem kinematischen Modell der Straße, auf der sich das Fahrzeug befindet, repräsentiert;
Bestimmen eines fünften Wertebereichs der Vorderrad-Lenkwinkeländerungsrate des Fahrzeugs und eines sechsten Wertebereichs des Raddrehmoments des Fahrzeugs basierend auf einer zweiten Beschränkungsbedingung und dem dynamischen Fahrzeug-Straße-Modell, wobei die zweite Beschränkungsbedingung die maximale Längsgeschwindigkeit des Fahrzeugs, den maximalen Vorderrad-Lenkwinkel des Fahrzeugs und die maximale Vorderrad-Lenkwinkeländerungsrate des Fahrzeugs umfasst und die zweite Beschränkungsbedingung basierend auf den Statusinformationen des Fahrzeugs erlangt wird;
Bestimmen des fünften Wertebereichs als den Wertebereich der Vorderrad-Lenkwinkeländerungsrate des Fahrzeugs; und
Bestimmen des sechsten Wertebereichs als den Wertebereich des Raddrehmoments des Fahrzeugs.

5. Fahrzeugsteuerungsverfahren nach Anspruch 4, wobei die zweite Beschränkungsbedingung ferner den maximalen Gierwinkel des Fahrzeugs und/oder die maximale Gierwinkelbeschleunigung des Fahrzeugs umfasst.

6. Fahrzeugsteuerungsverfahren nach einem der Ansprüche 2 bis 5, wobei das Bestimmen eines Wertebereichs einer Vorderrad-Lenkwinkeländerungsrate eines Fahrzeugs und eines Wertebereichs eines Raddrehmoments des Fahrzeugs basierend auf einem dynamischen Modell des Fahrzeugs, einem kinematischen Modell einer Straße, auf der sich das Fahrzeug befindet, einem Reifenreibungsmodell des Fahrzeugs und Statusinformationen des Fahrzeugs ferner umfasst:

Erlangen einer Schnittmenge von mindestens zwei des ersten Wertebereichs, eines dritten Wertebereichs und eines fünften Wertebereichs der Vorderrad-Lenkwinkeländerungsrate des Fahrzeugs, um den Wertebereich der Vorderrad-Lenkwinkeländerungsrate des Fahrzeugs zu erlangen; und
Erlangen einer Schnittmenge von mindestens zwei des zweiten Wertebereichs, eines vierten Wertebereichs und eines sechsten Wertebereichs des Raddrehmoments des Fahrzeugs, um den Wertebereich des Raddrehmoments des Fahrzeugs zu erlangen.

7. Fahrzeugsteuerungsverfahren nach Anspruch 3, wobei das Verfahren ferner umfasst:

   wenn die Distanz zwischen dem Fahrzeug und dem Hindernis kleiner als die oder gleich der im Voraus eingestellten Sicherheitsdistanz ist, Bestimmen der ersten Beschränkungsbedingung basierend auf der Distanz zwischen dem Hindernis und dem Straßenrand, der Breite des Fahrzeugs und der Breite der Straße, auf der sich das Fahrzeug befindet; oder
   wenn die Distanz zwischen dem Fahrzeug und dem Hindernis größer als die im Voraus eingestellte Sicherheitsdistanz ist, Bestimmen der ersten Beschränkungsbedingung basierend auf der Breite des Fahrzeugs und der Breite der Straße, auf der sich das Fahrzeug befindet.

8. Fahrzeugsteuerungsverfahren nach einem der Ansprüche 1 bis 7, wobei das Bestimmen eines Werts der Vorderrad-Lenkwinkeländerungsrate des Fahrzeugs basierend auf dem Wertebereich der Vorderrad-Lenkwinkeländerungsrate des Fahrzeugs und einer Seitenbewegung-Zielfunktion des Fahrzeugs umfasst:

   Bestimmen eines minimalen Werts der Seitenbewegung-Zielfunktion des Fahrzeugs basierend auf dem Wertebereich der Vorderrad-Lenkwinkeländerungsrate des Fahrzeugs; und
   Bestimmen eines Werts, der von der Vorderrad-Lenkwinkeländerungsrate ist und der mit dem minimalen Wert der Seitenbewegung-Zielfunktion des Fahrzeugs korrespondiert, als die Vorderrad-Lenkwinkeländerungsrate des Fahrzeugs.

9. Fahrzeugsteuerungsverfahren nach einem der Ansprüche 1 bis 8, wobei das Bestimmen eines Werts des Raddrehmoments des Fahrzeugs basierend auf dem Wertebereich des Raddrehmoments des Fahrzeugs und einer Längsbewegung-Zielfunktion des Fahrzeugs umfasst:

   Bestimmen eines minimalen Werts der Längsbewegung-Zielfunktion des Fahrzeugs basierend auf dem Wertebereich des Raddrehmoments des Fahrzeugs; und
   Bestimmen eines Werts, der von dem Raddrehmoment ist und der mit dem minimalen Wert der Längsbewegung-Zielfunktion des Fahrzeugs korrespondiert, als das Raddrehmoment des Fahrzeugs.

10. Fahrzeugsteuerungsverfahren nach Anspruch 8, wobei das Bestimmen eines minimalen Werts der Seitenbewegung-Zielfunktion des Fahrzeugs basierend auf dem Wertebereich der Vorderrad-Lenkwinkeländerungsrate des Fahrzeugs umfasst:

    Bestimmen, für jeden Wert der Vorderrad-Lenkwinkeländerungsrate des Fahrzeugs innerhalb des Wertebereichs der Vorderrad-Lenkwinkeländerungsrate des Fahrzeugs, einer Längsgeschwindigkeit des Fahrzeugs, eines Richtungswinkels des Fahrzeugs, eines Richtungswinkels des Straßenrands, einer Krümmung einer Fahrzeugspur, einer Krümmung des Straßenrands und einer Distanz zwischen dem Fahrzeug und einem Hindernis, die mit jedem Wert der Vorderrad-Lenkwinkeländerungsrate des Fahrzeugs korrespondieren;
    Bestimmen, basierend auf einer Differenz zwischen dem Richtungswinkel des Fahrzeugs und dem Richtungswinkel des Straßenrands, einer Differenz zwischen der Krümmung der Fahrzeugspur und der Krümmung des Straßenrands, des Werts der Vorderrad-Lenkwinkeländerungsrate und einer Differenz zwischen einem Hindernisaufprallradius und der Distanz zwischen dem Fahrzeug und dem Hindernis, eines Werts, der von der Seitenbewegung-Zielfunktion des Fahrzeugs ist und der mit jedem Wert der Vorderrad-Lenkwinkeländerungsrate des Fahrzeugs korrespondiert; und
    Bestimmen des minimalen Werts der Seitenbewegung-Zielfunktion des Fahrzeugs.

11. Fahrzeugsteuerungsverfahren nach Anspruch 9, wobei das Bestimmen eines minimalen Werts der Längsbewegung-Zielfunktion des Fahrzeugs basierend auf dem Wertebereich des Raddrehmoments des Fahrzeugs umfasst:

    Bestimmen, für jeden Wert des Raddrehmoments des Fahrzeugs innerhalb des Wertebereichs des Raddrehmoments des Fahrzeugs, einer Längsgeschwindigkeit, die von dem Fahrzeug ist und die mit jedem Wert des Raddrehmoments des Fahrzeugs und einer Ziel-Längsgeschwindigkeit korrespondiert;
    Bestimmen, basierend auf dem Wert des Raddrehmoments des Fahrzeugs und einer Differenz zwischen der Längsgeschwindigkeit des Fahrzeugs und der Ziel-Längsgeschwindigkeit, eines Werts, der von der Längs-Zielfunktion des Fahrzeugs ist und der mit jedem Wert des Raddrehmoments des Fahrzeugs korrespondiert; und
    Bestimmen des minimalen Werts der Längs-Zielfunktion des Fahrzeugs.

12. Fahrzeugsteuerungsvorrichtung, konfiguriert zum Durchführen des Verfahrens nach einem der Ansprüche 1 bis 11.

**13.** Computerlesbares Speichermedium, umfassend ein Programm und Anweisungen, wobei, wenn das Programm oder die Anweisungen auf einem Computer ausgeführt werden, das Fahrzeugsteuerungsverfahren nach einem der Ansprüche 1 bis 11 implementiert wird.

**14.** Computerprogrammprodukt, umfassend Anweisungen, wobei, wenn das Computerprogrammprodukt auf einem Computer ausgeführt wird, der Computer in die Lage versetzt wird, das Fahrzeugsteuerungsverfahren nach einem der Ansprüche 1 bis 11 durchzuführen.

**Revendications**

**1.** Procédé de commande de véhicule, le procédé comprenant :

la détermination (S1101) d'une plage de valeurs d'un taux de changement d'angle de braquage de roues avant d'un véhicule et d'une plage de valeurs d'un couple de roues du véhicule sur la base d'un modèle dynamique du véhicule, d'un modèle cinématique d'une route sur laquelle le véhicule est situé, d'un modèle de frottement de pneus du véhicule, et d'informations de statut du véhicule, le modèle dynamique du véhicule représentant une règle de changement d'un statut de mouvement du véhicule, le modèle cinématique de la route sur laquelle le véhicule est situé représentant une règle de changement d'un emplacement du véhicule par rapport à un bord de route de la route sur laquelle le véhicule est situé, et le modèle de frottement de pneus du véhicule représentant une règle de changement d'une force de frottement de pneus du véhicule ;
la détermination (S1102) d'une valeur du taux de changement d'angle de braquage de roues avant du véhicule sur la base de la plage de valeurs du taux de changement d'angle de braquage de roues avant du véhicule et d'une fonction cible de mouvement latéral du véhicule, la fonction cible de mouvement latéral du véhicule étant une fonction sur le taux de changement d'angle de braquage de roues avant du véhicule, et la fonction cible de mouvement latéral du véhicule représentant un écart entre un mouvement latéral du véhicule et un mouvement latéral idéal ;
la détermination (S1103) d'une valeur du couple de roues du véhicule sur la base de la plage de valeurs du couple de roues du véhicule et d'une fonction cible de mouvement longitudinal du véhicule, la fonction cible de mouvement longitudinal du véhicule étant une fonction concernant le couple de roues du véhicule, et la fonction cible de mouvement longitudinal du véhicule représentant un écart entre un mouvement longitudinal du véhicule et un mouvement longitudinal idéal ; et
la commande (S1104) d'un mouvement du véhicule sur la base de la valeur du taux de changement d'angle de braquage de roues avant du véhicule et de la valeur du couple de roues du véhicule.

**2.** Procédé de commande de véhicule selon la revendication 1, dans lequel les informations de statut du véhicule comprennent des informations de statut du véhicule au niveau d'un point de départ et des informations de statut du véhicule au niveau d'un point de terminaison, le point de départ étant un emplacement du véhicule à un moment initial, et le point de terminaison étant un emplacement du véhicule après que le mouvement se termine ; et
la détermination d'une plage de valeurs d'un taux de changement d'angle de braquage de roues avant d'un véhicule et d'une plage de valeurs d'un couple de roues du véhicule sur la base d'un modèle dynamique du véhicule, d'un modèle cinématique d'une route sur laquelle le véhicule est situé, d'un modèle de frottement de pneus du véhicule, et d'informations de statut du véhicule comprend :

l'établissement d'un modèle dynamique véhicule-route sur la base du modèle de frottement de pneus du véhicule, du modèle dynamique du véhicule et du modèle cinématique de la route sur laquelle le véhicule est situé, le modèle dynamique véhicule-route représentant une relation d'association entre le modèle dynamique du véhicule et le modèle cinématique de la route sur laquelle le véhicule est situé ;
la détermination d'une première plage de valeurs du taux de changement d'angle de braquage de roues avant du véhicule et d'une deuxième plage de valeurs du couple de roues du véhicule sur la base des informations de statut du véhicule au niveau du point de départ, des informations de statut du véhicule au niveau du point de terminaison, et du modèle dynamique véhicule-route ;
la détermination de la première plage de valeurs en tant que plage de valeurs du taux de changement d'angle de braquage de roues avant du véhicule ; et
la détermination de la deuxième plage de valeurs en tant que plage de valeurs du couple de roues du véhicule.

**3.** Procédé de commande de véhicule selon la revendication 1 ou 2, dans lequel les informations de statut du véhicule comprennent une distance entre le véhicule et un obstacle, une distance de sécurité prédéfinie, une distance entre l'obstacle et le bord de route, une largeur du véhicule, et une largeur de la route sur laquelle le véhicule est situé, et la distance de sécurité prédéfinie est une distance prédéfinie entre le véhicule et un obstacle ; et

la détermination d'une plage de valeurs d'un taux de changement d'angle de braquage de roues avant d'un véhicule et d'une plage de valeurs d'un couple de roues du véhicule sur la base d'un modèle dynamique du véhicule, d'un modèle cinématique d'une route sur laquelle le véhicule est situé, d'un modèle de frottement de pneus du véhicule, et d'informations de statut du véhicule comprend :

l'établissement d'un modèle dynamique véhicule-route sur la base du modèle de frottement de pneus du véhicule, du modèle dynamique du véhicule, et du modèle cinématique de la route sur laquelle le véhicule est situé, le modèle dynamique véhicule-route représentant une relation d'association entre le modèle dynamique du véhicule et le modèle cinématique de la route sur laquelle le véhicule est situé ;

la détermination d'une troisième plage de valeurs du taux de changement d'angle de braquage de roues avant du véhicule et d'une quatrième plage de valeurs du couple de roues du véhicule sur la base d'une première condition de contrainte et du modèle dynamique véhicule-route, la première condition de contrainte étant une plage de valeurs d'une distance entre le bord de route et le véhicule, et la première condition de contrainte étant obtenue sur la base des informations de statut du véhicule ;

la détermination de la troisième plage de valeurs en tant que plage de valeurs du taux de changement d'angle de braquage de roues avant du véhicule ; et

la détermination de la quatrième plage de valeurs en tant que plage de valeurs du couple de roues du véhicule.

4. Procédé de commande de véhicule selon l'une quelconque des revendications 1 à 3, dans lequel les informations de statut du véhicule comprennent une vitesse longitudinale maximale du véhicule, un angle de braquage de roues avant maximal du véhicule, un taux de changement d'angle de braquage de roues avant maximal du véhicule, un angle de lacet maximal du véhicule, et une accélération angulaire de lacet maximale du véhicule ; et

la détermination d'une plage de valeurs d'un taux de changement d'angle de braquage de roues avant d'un véhicule et d'une plage de valeurs d'un couple de roues du véhicule sur la base d'un modèle dynamique du véhicule, d'un modèle cinématique d'une route sur laquelle le véhicule est situé, d'un modèle de frottement de pneus du véhicule, et d'informations de statut du véhicule comprend :

l'établissement d'un modèle dynamique véhicule-route sur la base du modèle de frottement de pneus du véhicule, du modèle dynamique du véhicule et du modèle cinématique de la route sur laquelle le véhicule est situé, le modèle dynamique véhicule-route représentant une relation d'association entre le modèle dynamique du véhicule et le modèle cinématique de la route sur laquelle le véhicule est situé ;

la détermination d'une cinquième plage de valeurs du taux de changement d'angle de braquage de roues avant du véhicule et d'une sixième plage de valeurs du couple de roues du véhicule sur la base d'une deuxième condition de contrainte et du modèle dynamique véhicule-route, la deuxième condition de contrainte comprenant la vitesse longitudinale maximale du véhicule, l'angle de braquage de roues avant maximal du véhicule, et le taux de changement d'angle de braquage de roues avant maximal du véhicule, et la deuxième condition de contrainte étant obtenue sur la base des informations de statut du véhicule ;

la détermination de la cinquième plage de valeurs en tant que plage de valeurs du taux de changement d'angle de braquage de roues avant du véhicule ; et

la détermination de la sixième plage de valeurs en tant que plage de valeurs du couple de roues du véhicule.

5. Procédé de commande de véhicule selon la revendication 4, dans lequel la deuxième condition de contrainte comprend en outre l'angle de lacet maximal du véhicule et/ou l'accélération angulaire de lacet maximal du véhicule.

6. Procédé de commande de véhicule selon l'une quelconque des revendications 2 à 5, dans lequel la détermination d'une plage de valeurs d'un taux de changement d'angle de braquage de roues avant d'un véhicule et d'une plage de valeurs d'un couple de roues du véhicule sur la base d'un modèle dynamique du véhicule, d'un modèle cinématique d'une route sur laquelle le véhicule est situé, d'un modèle de frottement de pneus du véhicule, et d'informations de statut du véhicule comprend en outre :

l'obtention d'un ensemble d'intersections d'au moins deux éléments parmi la première plage de valeurs, une troisième plage de valeurs, et une cinquième plage de valeurs du taux de changement d'angle de braquage de roues avant du véhicule, pour obtenir la plage de valeurs du taux de changement d'angle de braquage de roues avant du véhicule ; et

l'obtention d'un ensemble d'intersections d'au moins deux éléments parmi la deuxième plage de valeurs, une quatrième plage de valeurs, et une sixième plage de valeurs du couple de roues du véhicule, pour obtenir la plage de valeurs du couple de roues du véhicule.

7. Procédé de commande de véhicule selon la revendication 3, le procédé comprenant en outre :

si la distance entre le véhicule et l'obstacle est inférieure ou égale à la distance de sécurité prédéfinie, la détermination de la première condition de contrainte sur la base de la distance entre l'obstacle et le bord de route, de la largeur du véhicule, et de la largeur de la route sur laquelle le véhicule est situé ; ou
si la distance entre le véhicule et l'obstacle est supérieure à la distance de sécurité prédéfinie, la détermination de la première condition de contrainte sur la base de la largeur du véhicule et de la largeur de la route sur laquelle le véhicule est situé.

8. Procédé de commande de véhicule selon l'une quelconque des revendications 1 à 7, dans lequel la détermination d'une valeur du taux de changement d'angle de braquage de roues avant du véhicule sur la base de la plage de valeurs du taux de changement d'angle de braquage de roues avant du véhicule et d'une fonction cible de mouvement latéral du véhicule comprend :

la détermination d'une valeur minimale de la fonction cible de mouvement latéral du véhicule sur la base de la plage de valeurs du taux de changement d'angle de braquage de roues avant du véhicule ; et
la détermination d'une valeur qui est du taux de changement d'angle de braquage de roues avant et qui correspond à la valeur minimale de la fonction cible de mouvement latéral du véhicule en tant que taux de changement d'angle de braquage de roues avant du véhicule.

9. Procédé de commande de véhicule selon l'une quelconque des revendications 1 à 8, dans lequel la détermination d'une valeur du couple de roues du véhicule sur la base de la plage de valeurs du couple de roues du véhicule et d'une fonction cible de mouvement longitudinal du véhicule comprend :

la détermination d'une valeur minimale de la fonction cible de mouvement longitudinal du véhicule sur la base de la plage de valeurs du couple de roues du véhicule ; et
la détermination d'une valeur qui est du couple de roues et qui correspond à la valeur minimale de la fonction cible de mouvement longitudinal du véhicule en tant que couple de roues du véhicule.

10. Procédé de commande de véhicule selon la revendication 8, dans lequel la détermination d'une valeur minimale de la fonction cible de mouvement latéral du véhicule sur la base de la plage de valeurs du taux de changement d'angle de braquage de roues avant du véhicule comprend :

la détermination, pour chaque valeur du taux de changement d'angle de braquage de roues avant du véhicule dans la plage de valeurs du taux de changement d'angle de braquage de roues avant du véhicule, d'une vitesse longitudinale du véhicule, d'un angle de cap du véhicule, d'un angle de cap du bord de route, d'une courbure d'une voie de véhicule, d'une courbure du bord de route, et d'une distance entre le véhicule et un obstacle qui correspondent à chaque valeur du taux de changement d'angle de braquage de roues avant du véhicule ;
la détermination, sur la base d'une différence entre l'angle de cap du véhicule et l'angle de cap du bord de route, d'une différence entre la courbure de la voie de véhicule et la courbure du bord de route, de la valeur du taux de changement d'angle de braquage de roues avant, et d'une différence entre un rayon d'impact d'obstacle et la distance entre le véhicule et l'obstacle, d'une valeur qui est de la fonction cible de mouvement latéral du véhicule et qui correspond à chaque valeur du taux de changement d'angle de braquage de roues avant du véhicule ; et
la détermination de la valeur minimale de la fonction cible de mouvement latéral du véhicule.

11. Procédé de commande de véhicule selon la revendication 9, dans lequel la détermination d'une valeur minimale de la fonction cible de mouvement longitudinal du véhicule sur la base de la plage de valeurs du couple de roues du véhicule comprend :

la détermination, pour chaque valeur du couple de roues du véhicule dans la plage de valeur du couple de roues du véhicule, d'une vitesse longitudinale qui est du véhicule et qui correspond à chaque valeur du couple de roues du véhicule et à une vitesse longitudinale cible ;
la détermination, sur la base de la valeur du couple de roues du véhicule et d'une différence entre la vitesse longitudinale du véhicule et la vitesse longitudinale cible, d'une valeur qui est de la fonction cible longitudinale du véhicule et qui correspond à chaque valeur du couple de roues du véhicule ; et
la détermination de la valeur minimale de la fonction cible longitudinale du véhicule.

12. Appareil de commande de véhicule, configuré pour réaliser le procédé selon l'une quelconque des revendications 1 à 11.

13. Support de stockage lisible par ordinateur, comprenant un programme et des instructions, dans lequel lorsque le programme est exécuté ou que les instructions sont exécutées sur un ordinateur, le procédé de commande de véhicule selon l'une quelconque des revendications 1 à 11 est mis en œuvre.

14. Produit de programme informatique comprenant des instructions, dans lequel lorsque le produit de programme informatique est exécuté sur un ordinateur, l'ordinateur est activé pour réaliser le procédé de commande de véhicule selon l'une quelconque des revendications 1 à 11.

Vehicle 100

Drive system 110
- Engine 111
- Transmission device 112
- Energy source 113
- Wheels 114

Sensor system 120
- Positioning system 121
- Inertial measurement unit 122
- Laser radar 123
- Rangefinder 124
- Camera 125

Control system 130
- Steering system 131
- Accelerator 132
- Brake unit 133
- Computer vision system 134
- Route control system 135
- Obstacle avoidance system 136

Peripheral device 140
- Wireless communications system 141
- Vehicle-mounted computer 142
- Microphone 143
- Speaker 144

Computer system 160
- Processor 161
- Data storage apparatus 162
  - Instructions 1621

Power supply 150

User interface 170

FIG. 1

Road environment → Perception and fusion module 201 → Behavior decision module 202 → Track planning module 203 → Vehicle control module 204

FIG. 2

Road environment information

Obstacle potential field | Boundary potential field | Target point potential field

Track planning module

Fastest descent gradient solving

Path planning

Nonlinear vehicle model

Vehicle control module

Balance point linearization processing

Predictive control value solving

Vehicle control information

Vehicle status information

FIG. 3

Initialize a random tree

Determine random
sampling points

Track
planning
module

Search for a nearest
sampling point

Expand nodes of the
random tree

Road environment
information

Collision test

Yes

No

Expand nodes of the
random tree

Add a node and a line to
an RRT

No

Termination
condition

Yes

Plan a path

Vehicle control module

"Preview-follower"
driver model

Vehicle control
information

Vehicle model

Vehicle status
information

FIG. 4

FIG. 5

FIG. 6

FIG. 7

EP 4 099 118 B1

FIG. 8

Operating environment 700

Cloud service center 720

Network 711

Vehicle 713

Vehicle 712

FIG. 9

Computer program product 800

Signal bearer medium 801

Program instructions 802

| Computer-readable medium 803 | Computer-recordable medium 804 | Communication medium 805 |

FIG. 10

Determine a value range of a front wheel steering angle change rate of a vehicle and a value range of a wheel torque of the vehicle based on a dynamic model of the vehicle, a kinematic model of a road on which the vehicle is located, a tire friction model of the vehicle, and status information of the vehicle — S1101

Determine a value of the front wheel steering angle change rate of the vehicle based on the value range of the front wheel steering angle change rate of the vehicle and a lateral motion target function of the vehicle — S1102

Determine a value of the wheel torque of the vehicle based on the value range of the wheel torque of the vehicle and a longitudinal motion target function of the vehicle — S1103

Control a motion of the vehicle based on the value of the front wheel steering angle change rate of the vehicle and the value of the wheel torque of the vehicle — S1104

FIG. 11

FIG. 12

FIG. 13

FIG. 14

(a)

(b)

FIG. 15

FIG. 16

FIG. 17

FIG. 18

FIG. 19

FIG. 20

FIG. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QUIRYNEN RIEN et al.** Embedded Optimization Algorithms for Steering in Autonomous Vehicles based on Nonlinear Model Predictive Control. *2018 ANNUAL AMERICAN CONTROL CONFERENCE (ACC), AACC*, 27 June 2018, 3251-3256

- **BERNTORP KARL et al.** Models and methodology for optimal trajectory generation in safety-critical road–vehicle manoeuvres. *Vehicle System Dynamics: international journal of vehicle mechanics and mobility*, 03 October 2014, vol. 52, 1304-1332